# EUROPEAN PATENT APPLICATION

(11) **EP 4 080 826 A1**
(43) Date of publication of application: **26.10.2022**
(21) Application number: 20909886.2
(22) Date of filing: 24.12.2020
(51) Int. Cl.: H04L 12/24

(54) **VIRTUAL NETWORK FUNCTION DEPLOYMENT METHOD, APPARATUS AND SYSTEM**

(30) Priority: 31.12.2019 CN 201911408221
(71) Applicant: Huawei Technologies Co., Ltd., Shenzhen, Guangdong 518129 (CN)
(72) Inventor: WANG, Zhenyu, Shenzhen, Guangdong 518129 (CN)
(74) Representative: Maiwald Patent- und Rechtsanwaltsgesellschaft mbH
(86) International application number: PCT/CN2020/139137
(87) International publication number: WO 2021/136074

(57) **Abstract**

A virtual network function deployment method and apparatus, and a system are provided. The method includes: An NFV MANO obtains a first VDU in a plurality of VDUs that describe a first sub-function of a virtual network function VNF, where types of servers indicated by server labels included in all of the plurality of VDUs are different, each VDU corresponds to one type of virtual device, and a server label included in each VDU indicates a server that can provide a computing resource for the type of virtual device corresponding to the VDU. The NFV MANO sends a virtual device creation request to a resource management layer based on the first VDU, where the virtual device creation request is used to indicate to create one type of virtual device corresponding to the first VDU. At least two VDUs that describe a same sub-function are obtained, and types of servers corresponding to the VDUs are different, so that virtual devices can be created on a plurality of types of servers. Therefore, the same sub-function can be deployed on at least two types of servers, and VNF deployment is flexible.

## Description

This application claims priority to Chinese Patent Application No. 201911408221.1, filed with the China National Intellectual Property Administration on December 31, 2019 and entitled "VIRTUAL NETWORK FUNCTION DEPLOYMENT METHOD AND APPARATUS, AND SYSTEM", which is incorporated herein by reference in its entirety.

### TECHNICAL FIELD

Embodiments of this application relate to the communications field, and in particular, to a virtual network function deployment method and apparatus, and a system.

### BACKGROUND

A network function virtualization (network function virtualization, NFV for short) technology can be simply understood as migrating functions of network elements used in a telecommunications network from a current dedicated hardware platform to a general commercial off-the-shelf (Commercial-off-the-shelf, COTS for short) server. The network elements used in the telecommunications network are converted into independent applications by using the NFV technology, and the applications may be flexibly deployed on a uniform infrastructure platform constructed based on devices such as a standard server, a storage device, and a switch. Resource pooling and virtualization are performed on an infrastructure hardware device by using the virtualization technology, and virtual resources are provided to upper-layer applications, to implement decoupling between an application and hardware, so that virtual resources can be quickly added for each application to quickly increase a system capacity, or virtual resources can be quickly reduced to reduce a system capacity, so as to greatly improve network resilience. General COTS servers are used to form a shared resource pool, so that a hardware device does not need to be independently deployed for a newly developed service, to greatly shorten a rollout period of the new service.

Currently, all sub-functions included in a virtual network function (virtual network function, VNF for short) provided in the NFV technology need to be deployed on a same type of server (if types of included central processing units (central processing units, CPUs for short) are the same, types of servers are the same), and therefore deployment flexibility is low.

Therefore, how to deploy the sub-functions included in the VNF on a plurality of types of servers to improve deployment flexibility is an urgent technical problem to be resolved.

### SUMMARY

Embodiments of this application provide a virtual network function deployment method and apparatus, and a system, so that a virtual network function can be flexibly deployed on a plurality of types of servers.

According to a first aspect, an embodiment of this application provides a virtual network function deployment method, including: A network function virtualization management and orchestration NFV MANO system obtains a first virtualization deployment unit VDU in a plurality of VDUs that describe a first sub-function of a virtual network function VNF, where types of servers indicated by server labels included in all of the plurality of VDUs are different, each VDU corresponds to one type of virtual device, and a server label included in each VDU indicates a server that can provide a computing resource for the type of virtual device corresponding to the VDU; and types of central processing units CPUs in different types of servers are different. The NFV MANO sends a virtual device creation request to a resource management layer based on the first VDU, where the virtual device creation request is used to indicate the resource management layer to create one type of virtual device corresponding to the first VDU, to deploy the first sub-function.

In this solution, two VDUs that describe a same sub-function are obtained, and types of servers indicated by server labels included in both of the two VDUs are different, so that the resource management layer can respectively create virtual devices on two types of servers based on the two VDUs. Therefore, the same sub-function can be deployed on at least two types of servers. In this way, VNF deployment is flexible, and there is no limitation that the VNF can be deployed on only one type of server.

In a possible implementation, the obtaining a first VDU in a plurality of VDUs includes: The NFV MANO obtains a first server label corresponding to a first VDU template. The NFV MANO obtains first instance information corresponding to the first VDU template. The NFV MANO adds the first server label and the first instance information to the first VDU template to generate the first VDU.

This solution provides a specific implementation of obtaining the first VDU.

In a possible implementation, the method further includes: The NFV MANO obtains a second VDU in the plurality of VDUs. That the NFV MANO sends a virtual device creation request to a resource management layer based on the first VDU includes: The NFV MANO sends the virtual device creation request to the resource management layer based on the first VDU and the second VDU, where the virtual device creation request is further used to indicate the resource management layer to create one type of virtual device corresponding to the second VDU.

In this solution, a same sub-function can be deployed on at least two types of servers. In this way, VNF deployment is flexible, and there is no limitation that the VNF can be deployed on only one type of server.

In a possible implementation, a type of a server indicated by a second server label in the second VDU is a second type, and a type of a server indicated by the first server label in the first VDU is a first type. The method further includes: The NFV MANO sends a scale-out pre-notification message to a VNF management node, where the scale-out pre-notification message includes the first type and the second type.

In this solution, the VNF management node can support the VNF in being deployed on a plurality of types of servers, to ensure normal running of a service.

In a possible implementation, after the NFV MANO sends the virtual device creation request to the resource management layer based on the first VDU, the method further includes: The NFV MANO determines, based on a KPI, to perform scaling on a virtual device corresponding to the VNF, where the KPI is obtained by collecting statistics about service information of a plurality of types of virtual devices corresponding to the VNF, and the scaling is virtual device scale-out or virtual device scale-in. The NFV MANO performs scaling control on various types of virtual devices that match first scaling information, where the first scaling information includes identifiers of VDUs corresponding to various types of scalable virtual devices that correspond to the KPI, and sub-functions corresponding to VDUs indicated by the first scaling information are different.

In this solution, efficiency of performing scaling on the virtual device is high.

In a possible implementation, after the NFV MANO sends the virtual device creation request to the resource management layer based on the first VDU, the method further includes: The NFV MANO determines, based on a KPI, to perform scaling on a virtual device corresponding to the VNF, where the KPI is obtained by collecting statistics about service information of a plurality of types of virtual devices corresponding to the VNF, and the scaling is virtual device scale-out or virtual device scale-in. For each type of virtual device that matches second scaling information, the NFV MANO sends a pre-scaling request to the VNF management node, where the pre-scaling request includes an identifier of a VDU corresponding to the type of virtual device, the second scaling information includes identifiers of VDUs corresponding to various types of scalable virtual devices that correspond to the KPI, and VDUs corresponding to a same sub-function exist in VDUs indicated by the second scaling information. The NFV MANO receives a first-type notification message or a second-type notification message from the VNF management node, where the first-type notification message indicates the NFV MANO to perform scaling control on one type of virtual device corresponding to the VDU indicated by the identifier that is of the VDU and that is included in the pre-scaling request, and the second-type notification message indicates the NFV MANO not to perform scaling control on one type of virtual device corresponding to the VDU indicated by the identifier that is of the VDU and that is included in the pre-scaling request.

In this solution, the VNF management node determines a type of virtual device on which scaling is to be performed. In other words, the VNF management node determines a type of virtual device that corresponds to a VDU and on which scaling is to be performed. In addition, for one sub-function of the VNF, the VNF management node controls to perform, in one scaling period, scaling on only one type of virtual device corresponding to one of a plurality of VDUs corresponding to the sub-function. This greatly reduces a probability that virtual devices corresponding to a specific sub-function are excessively scaled out or scaled in, and ensures normal running of the VNF

In a possible implementation, a virtualized network function descriptor VNFD describing the VNF includes a plurality of pieces of indication information, and the indication information is used to indicate VDUs corresponding to a same sub-function. After the NFV MANO sends the virtual device creation request to the resource management layer based on the first VDU, the method further includes: The NFV MANO determines, based on a KPI, to perform scaling on a virtual device corresponding to the VNF, where the KPI is obtained by collecting statistics about service information of a plurality of types of virtual devices corresponding to the VNF, and the scaling is virtual device scale-out or virtual device scale-in. The NFV MANO determines, based on the indication information, to perform scaling control on various types of virtual devices that match second scaling information, where the second scaling information includes identifiers of VDUs corresponding to various types of scalable virtual devices that correspond to the KPI, and VDUs corresponding to a same sub-function exist in VDUs indicated by the second scaling information.

In this solution, the NFV MANO determines, based on the indication information in the VNFD, a type of virtual device on which scaling is to be performed. In addition, for one sub-function of the VNF, the NFV MANO performs scaling control on only one type of virtual device corresponding to one of a plurality of VDUs corresponding to the sub-function. This greatly reduces a probability that virtual devices corresponding to a specific sub-function are excessively scaled out or scaled in, and ensures normal running of the VNF. In addition, in this solution, efficiency of performing scaling on the virtual device is high.

In a possible implementation, after the NFV MANO sends the virtual device creation request to the resource management layer based on the first VDU, the method further includes: The NFV MANO obtains updated quantities of instances in at least two VDUs in a first group of VDUs, where VDUs in the first group of VDUs correspond to a same sub-function. For a to-be-scaled-out VDU whose quantity of instances is increased in the at least two VDUs, the NFV MANO controls to add a first quantity of virtual devices corresponding to the to-be-scaled-out VDU, where the first quantity is an increased quantity of instances in the to-be-scaled-out VDU. For a to-be-scaled-in VDU whose quantity of instances is reduced in the at least two VDUs, the NFV MANO controls to reduce virtual devices corresponding to the to-be-scaled-in VDU by a second quantity, where the second quantity is a reduced quantity of instances in the to-be-scaled-in VDU.

This solution provides a specific implementation of migrating the virtual devices when the VNF is deployed on at least two types of servers.

In a possible implementation, that the NFV MANO obtains updated quantities of instances in at least two VDUs in a first group of VDUs includes: The NFV MANO obtains the updated quantities of instances in the at least two VDUs that are entered by a user.

In a possible implementation, a virtualized network function descriptor VNFD describing the VNF includes a plurality of pieces of indication information, and the indication information is used to indicate VDUs corresponding to a same sub-function. Before the NFV MANO obtains the updated quantities of instances in the at least two VDUs in the first group of VDUs, the method further includes: The NFV MANO determines, based on the indication information, each VDU belonging to the first group of VDUs. That the NFV MANO obtains updated quantities of instances in at least two VDUs in a first group of VDUs includes: The NFV MANO updates quantities of instances in the at least two VDUs in the first group of VDUs.

In this solution, efficiency of migrating the virtual devices is high.

In a possible implementation, after the NFV MANO sends the virtual device creation request to the resource management layer based on the first VDU, the method further includes: The NFV MANO obtains a migration instruction entered by the user. The NFV MANO obtains a name that is of a to-be-migrated virtual device and that is entered by the user. The NFV MANO determines, based on the name of the to-be-migrated virtual device and first indication information, a target VDU corresponding to a same sub-function as a VDU corresponding to the to-be-migrated virtual device, where the first indication information indicates another VDU corresponding to a same sub-function as the VDU corresponding to the to-be-migrated virtual device. The NFV MANO node controls, according to the migration instruction and based on the target VDU, the to-be-migrated virtual device to be migrated to a server of a same type as a server corresponding to the target VDU.

This solution provides a method for migrating virtual devices in batches. Therefore, efficiency of migrating the virtual devices in this solution is high.

According to a second aspect, an embodiment of this application provides a virtual network function deployment method. A network function virtualization infrastructure NFVI layer includes a first-type server and a second-type server, and types of central processing units CPUs in the first-type server and the second-type server are different. The method includes: A network function virtualization management and orchestration NFV MANO system obtains a VDU describing a first sub-function of a VNF, where the VDU describing the first sub-function includes a common virtual name of an image file used to create a first-type virtual device and an image file used to create a second-type virtual device, a first server label indicating the first-type server, and a second server label indicating the second-type server, the first-type server can provide a computing resource for the first-type virtual device, and the first-type server can provide a computing resource for the second-type virtual device. The NFV MANO sends a virtual device creation request to a resource management layer based on the VDU describing the first sub-function, where the virtual device creation request is used to indicate the resource management layer to create the first-type virtual device and/or the second-type virtual device, to deploy the first sub-function.

In this solution, another VDU describing a sub-function of the VNF is obtained to implement scale-out of the sub-function of the VNF, and a type of a server indicated by a server label in the obtained another VDU is different from a type of a server corresponding to a virtual device on which the sub-function of the VNF has been deployed, so that the resource management layer can create a virtual device on another type of server. Therefore, a same sub-function can be deployed on at least two types of servers. In this way, VNF deployment is flexible, and there is no limitation that the VNF can be deployed on only one type of server.

In a possible implementation, before the NFV MANO obtains the VDU describing the first sub-function, a VNFD used to describe the NFV MANO includes an original VDU describing the first sub-function, and the original VDU includes the second server label and first instance information. That the NFV MANO obtains the VDU describing the first sub-function of the VNF includes: The NFV MANO obtains the second server label corresponding to the original VDU. The NFV MANO obtains second instance information corresponding to the original VDU. The NFV MANO adds the second server label to the original VDU, and replaces the first instance information with the second instance information, to obtain the VDU describing the first sub-function of the VNF

This solution provides a specific implementation in which the NFV MANO obtains the VDU describing the first sub-function.

According to a third aspect, an embodiment of this application provides a virtual network function deployment method. A network function virtualization infrastructure NFVI layer includes a plurality of types of servers, and types of central processing units CPUs in different types of servers are different. The method includes: A resource management layer receives a virtual device creation request from a network function virtualization manager NFV MANO, where the virtual device creation request includes a server label and a virtual name of an image file of a to-be-created virtual device. The resource management layer determines a target server from a server indicated by the server label. The resource management layer maps the virtual name and a type of the target server to a real name of the image file of the to-be-created virtual device according to a preset mapping rule. The resource management layer obtains the image file of the to-be-created virtual device based on the real name. The resource management layer creates the virtual device based on the virtual device creation request and the image file of the to-be-created virtual device.

This solution provides a specific implementation in which the resource management layer creates the virtual device in the method corresponding to the second aspect. In this solution, image files of virtual devices that are created on different types of servers can be correctly obtained, to ensure normal creation of the virtual devices. Therefore, a same sub-function can be deployed on at least two types of servers. In this way, VNF deployment is flexible, and there is no limitation that the VNF can be deployed on only one type of server.

According to a fourth aspect, an embodiment of this application provides a virtual network function deployment method. A first sub-function of a virtual network function VNF corresponds to a first-type virtual device and a second-type virtual device, a server that provides a computing resource for the first-type virtual device is a first-type server, a server that provides a computing resource for the second-type virtual device is a second-type server, and types of central processing units CPUs in the first-type server and the second-type server are different. The method includes: A virtual network function VNF management node obtains configuration information, where the configuration information indicates that first-type software of the first sub-function corresponds to the first-type server, and second-type software of the first sub-function corresponds to the second-type server. The VNF management node installs the first-type software of the first sub-function on the first-type virtual device, and installs the second-type software of the first sub-function on the second-type virtual device, based on the configuration information.

This solution provides a specific implementation of installing software on a virtual device. In this solution, software on virtual devices that are created on different types of servers can be normally installed, to ensure that a same sub-function can be deployed on at least two types of servers. In this way, VNF deployment is flexible, and there is no limitation that the VNF can be deployed on only one type of server.

In a possible implementation, the method further includes: The VNF management node receives a scale-out pre-notification message from a network function virtualization manager NFV MANO, where the scale-out pre-notification message includes a first type and a second type. The VNF management node performs scale-out configuration based on the scale-out pre-notification message.

In this solution, the VNF management node can support the VNF in being deployed on a plurality of types of servers, to ensure normal running of a service.

In a possible implementation, the method further includes: The VNF management node receives a pre-scaling request from a network function virtualization manager NFV MANO, where the pre-scaling request includes an identifier of a VDU corresponding to a to-be-scaled virtual device. If no notification message indicating that the NFV MANO is allowed to perform scaling on another type of virtual device corresponding to a same sub-function as the to-be-scaled virtual device is sent to the NFV MANO in a current scaling period, the VNF management node sends a first-type notification message to the NFV MANO, where the first-type notification message indicates the NFV MANO to perform scaling control on one type of virtual device corresponding to the VDU indicated by the identifier that is of the VDU and that is included in the pre-scaling request, and the scaling is virtual device scale-out or virtual device scale-in. Alternatively, if a notification message indicating that the NFV MANO is allowed to perform scaling on another type of virtual device corresponding to a same sub-function as the to-be-scaled virtual device is sent to the NFV MANO in a current scaling period, the VNF management node sends a second-type notification message to the NFV MANO, where the second-type notification message indicates the NFV MANO not to perform scaling control on one type of virtual device corresponding to the VDU indicated by the identifier that is of the VDU and that is included in the pre-scaling request.

In this solution, a probability that virtual devices corresponding to a specific sub-function are excessively scaled out or scaled in can be greatly reduced, and normal running of the VNF can be ensured.

According to a fifth aspect, an embodiment of this application provides a virtual network function deployment apparatus, including: a processing module, configured to obtain a first virtualization deployment unit VDU in a plurality of VDUs that describe a first sub-function of a virtual network function VNF, where types of servers indicated by server labels included in all of the plurality of VDUs are different, each VDU corresponds to one type of virtual device, and a server label included in each VDU indicates a server that can provide a computing resource for the type of virtual device corresponding to the VDU; and types of central processing units CPUs in different types of servers are different; and a transceiver module, configured to send a virtual device creation request to a resource management layer based on the first VDU, where the virtual device creation request is used to indicate the resource management layer to create one type of virtual device corresponding to the first VDU, to deploy the first sub-function.

In a possible implementation, the processing module is specifically configured to: obtain a first server label corresponding to a first VDU template; obtain first instance information corresponding to the first VDU template; and add the first server label and the first instance information to the first VDU template to generate the first VDU.

In a possible implementation, the processing module is further configured to obtain a second VDU in the plurality of VDUs. The transceiver module is specifically configured to send the virtual device creation request to the resource management layer based on the first VDU and the second VDU, where the virtual device creation request is further used to indicate the resource management layer to create one type of virtual device corresponding to the second VDU.

In a possible implementation, a type of a server indicated by a second server label in the second VDU is a second type, and a type of a server indicated by the first server label in the first VDU is a first type. The transceiver module is further configured to send a scale-out pre-notification message to a VNF management node, where the scale-out pre-notification message includes the first type and the second type.

In a possible implementation, after the transceiver module sends the virtual device creation request to the resource management layer based on the first VDU, the processing module is further configured to: determine, based on a KPI, to perform scaling on a virtual device corresponding to the VNF, where the KPI is obtained by collecting statistics about service information of a plurality of types of virtual devices corresponding to the VNF, and the scaling is virtual device scale-out or virtual device scale-in; and perform scaling control on various types of virtual devices that match first scaling information, where the first scaling information includes identifiers of VDUs corresponding to various types of scalable virtual devices that correspond to the KPI, and sub-functions corresponding to VDUs indicated by the first scaling information are different.

In a possible implementation, after the transceiver module sends the virtual device creation request to the resource management layer based on the first VDU, the processing module is further configured to: determine, based on a KPI, to perform scaling on a virtual device corresponding to the VNF, where the KPI is obtained by collecting statistics about service information of a plurality of types of virtual devices corresponding to the VNF, and the scaling is virtual device scale-out or virtual device scale-in. For each type of virtual device that matches second scaling information, the transceiver module is further configured to send a pre-scaling request to the VNF management node, where the pre-scaling request includes an identifier of a VDU corresponding to the type of virtual device, the second scaling information includes identifiers of VDUs corresponding to various types of scalable virtual devices that correspond to the KPI, and VDUs corresponding to a same sub-function exist in VDUs indicated by the second scaling information. The transceiver module is further configured to receive a first-type notification message or a second-type notification message from the VNF management node, where the first-type notification message indicates the NFV MANO to perform scaling control on one type of virtual device corresponding to the VDU indicated by the identifier that is of the VDU and that is included in the pre-scaling request, and the second-type notification message indicates the NFV MANO not to perform scaling control on one type of virtual device corresponding to the VDU indicated by the identifier that is of the VDU and that is included in the pre-scaling request.

In a possible implementation, a virtualized network function descriptor VNFD describing the VNF includes a plurality of pieces of indication information, and the indication information is used to indicate VDUs corresponding to a same sub-function. After the transceiver module sends the virtual device creation request to the resource management layer based on the first VDU, the processing module is further configured to: determine, based on a KPI, to perform scaling on a virtual device corresponding to the VNF, where the KPI is obtained by collecting statistics about service information of a plurality of types of virtual devices corresponding to the VNF, and the scaling is virtual device scale-out or virtual device scale-in; and determine, based on the indication information, to perform scaling control on various types of virtual devices that match second scaling information, where the second scaling information includes identifiers of VDUs corresponding to various types of scalable virtual devices that correspond to the KPI, and VDUs corresponding to a same sub-function exist in VDUs indicated by the second scaling information.

In a possible implementation, after the transceiver module sends the virtual device creation request to the resource management layer based on the first VDU, the processing module is further configured to: obtain updated quantities of instances in at least two VDUs in a first group of VDUs, where VDUs in the first group of VDUs correspond to a same sub-function; for a to-be-scaled-out VDU whose quantity of instances is increased in the at least two VDUs, control to add a first quantity of virtual devices corresponding to the to-be-scaled-out VDU, where the first quantity is an increased quantity of instances in the to-be-scaled-out VDU; and for a to-be-scaled-in VDU whose quantity of instances is reduced in the at least two VDUs, control to reduce virtual devices corresponding to the to-be-scaled-in VDU by a second quantity, where the second quantity is a reduced quantity of instances in the to-be-scaled-in VDU.

In a possible implementation, the processing module is specifically configured to obtain the updated quantities of instances in the at least two VDUs that are entered by a user.

In a possible implementation, a virtualized network function descriptor VNFD describing the VNF includes a plurality of pieces of indication information, and the indication information is used to indicate VDUs corresponding to a same sub-function. Before the processing module obtains the updated quantities of instances in the at least two VDUs in the first group of VDUs, the processing module is further configured to determine, based on the indication information, each VDU belonging to the first group of VDUs. Correspondingly, the processing module is specifically configured to update a quantity of instances in the at least two VDUs in the first group of VDUs.

In a possible implementation, after the transceiver module sends the virtual device creation request to the resource management layer based on the first VDU, the processing module is further configured to: obtain a migration instruction entered by the user; obtain a name that is of a to-be-migrated virtual device and that is entered by the user; determine, based on the name of the to-be-migrated virtual device and first indication information, a target VDU corresponding to a same sub-function as a VDU corresponding to the to-be-migrated virtual device, where the first indication information indicates another VDU corresponding to a same sub-function as the VDU corresponding to the to-be-migrated virtual device; and control, according to the migration instruction and based on the target VDU, the to-be-migrated virtual device to be migrated to a server of a same type as a server corresponding to the target VDU.

According to a sixth aspect, an embodiment of this application provides a virtual network function deployment apparatus. A network function virtualization infrastructure NFVI layer includes a first-type server and a second-type server, and types of central processing units CPUs in the first-type server and the second-type server are different. The apparatus includes: a processing module, configured to obtain a VDU describing a first sub-function of a VNF, where the VDU describing the first sub-function includes a common virtual name of an image file used to create a first-type virtual device and an image file used to create a second-type virtual device, a first server label indicating the first-type server, and a second server label indicating the second-type server, the first-type server can provide a computing resource for the first-type virtual device, and the first-type server can provide a computing resource for the second-type virtual device; and a transceiver module, configured to send a virtual device creation request to a resource management layer based on the VDU describing the first sub-function, where the virtual device creation request is used to indicate the resource management layer to create the first-type virtual device and/or the second-type virtual device, to deploy the first sub-function.

In a possible implementation, before the processing module obtains the VDU describing the first sub-function, a VNFD used to describe the NFV MANO includes an original VDU describing the first sub-function, and the original VDU includes the second server label and first instance information. The processing module is specifically configured to: obtain the second server label corresponding to the original VDU; obtain second instance information corresponding to the original VDU; and add the second server label to the original VDU, and replace the first instance information with the second instance information, to obtain the VDU describing the first sub-function of the VNF

According to a seventh aspect, an embodiment of this application provides a virtual network function deployment apparatus. A network function virtualization infrastructure NFVI layer includes a plurality of types of servers, and types of central processing units CPUs in different types of servers are different. The apparatus includes: a transceiver module, configured to receive a virtual device creation request from a network function virtualization manager NFV MANO, where the virtual device creation request includes a server label and a virtual name of an image file of a to-be-created virtual device; and a processing module, configured to: determine a target server from a server indicated by the server label; map the virtual name and a type of the target server to a real name of the image file of the to-be-created virtual device according to a preset mapping rule; obtain the image file of the to-be-created virtual device based on the real name; and create the virtual device based on the virtual device creation request and the image file of the to-be-created virtual device.

According to an eighth aspect, an embodiment of this application provides a virtual network function deployment apparatus. A first sub-function of a virtual network function VNF corresponds to a first-type virtual device and a second-type virtual device, a server that provides a computing resource for the first-type virtual device is a first-type server, a server that provides a computing resource for the second-type virtual device is a second-type server, and types of central processing units CPUs in the first-type server and the second-type server are different. The apparatus includes: a processing module, configured to obtain configuration information, where the configuration information indicates that first-type software of the first sub-function corresponds to the first-type server, and second-type software of the first sub-function corresponds to the second-type server. The processing module is further configured to: install the first-type software of the first sub-function on the first-type virtual device, and install the second-type software of the first sub-function on the second-type virtual device, based on the configuration information.

In a possible implementation, the apparatus further includes a transceiver module. The transceiver module is configured to receive a scale-out pre-notification message from a network function virtualization manager NFV MANO, where the scale-out pre-notification message includes a first type and a second type. The processing module is further configured to perform scale-out configuration based on the scale-out pre-notification message.

In a possible implementation, the apparatus further includes a transceiver module. The transceiver module is configured to: receive a pre-scaling request from a network function virtualization manager NFV MANO, where the pre-scaling request includes an identifier of a VDU corresponding to a to-be-scaled virtual device; and if no notification message indicating that the NFV MANO is allowed to perform scaling on another type of virtual device corresponding to a same sub-function as the to-be-scaled virtual device is sent to the NFV MANO in a current scaling period, send a first-type notification message to the NFV MANO, where the first-type notification message indicates the NFV MANO to perform scaling control on one type of virtual device corresponding to the VDU indicated by the identifier that is of the VDU and that is included in the pre-scaling request, and the scaling is virtual device scale-out or virtual device scale-in; or
if a notification message indicating that the NFV MANO is allowed to perform scaling on another type of virtual device corresponding to a same sub-function as the to-be-scaled virtual device is sent to the NFV MANO in a current scaling period, send a second-type notification message to the NFV MANO, where the second-type notification message indicates the NFV MANO not to perform scaling control on one type of virtual device corresponding to the VDU indicated by the identifier that is of the VDU and that is included in the pre-scaling request.

According to a ninth aspect, an embodiment of this application provides a network function virtualization device, including: at least one processor; and
a memory communicatively connected to the at least one processor, where the memory stores instructions that can be executed by the at least one processor, and the instructions are executed by the at least one processor, so that the at least one processor can perform the method according to any one of the first aspect or the possible implementations of the first aspect, the method according to any one of the second aspect or the possible implementations of the second aspect, the method according to the third aspect, or the method according to any one of the fourth aspect or the possible implementations of the fourth aspect.

According to a tenth aspect, an embodiment of this application provides a non-transitory computer-readable storage medium that stores computer instructions, where the computer instructions are used to enable a computer to perform the method according to any one of the first aspect or the possible implementations of the first aspect, the method according to any one of the second aspect or the possible implementations of the second aspect, the method according to the third aspect, or the method according to any one of the fourth aspect or the possible implementations of the fourth aspect.

According to an eleventh aspect, an embodiment of this application provides a network function virtualization system, including a network function virtualization manager NFV MANO, a resource management layer, and a virtual network function VNF management node. The NFV MANO is configured to perform the method according to any one of the first aspect or the possible implementations of the first aspect or the method according to any one of the second aspect or the possible implementations of the second aspect. The resource management layer is configured to perform the method according to the third aspect. The VNF management node is configured to perform the method according to any one of the fourth aspect or the possible implementations of the fourth aspect.

One or more VDUs that describe a same sub-function and that are obtained in this application correspond to at least two types of servers in total, so that the resource management layer can create virtual devices on the at least two types of servers. Therefore, the same sub-function can be deployed on the at least two types of servers. In this way, VNF deployment is flexible, and there is no limitation that the VNF can be deployed on only one type of server.

### BRIEF DESCRIPTION OF DRAWINGS

FIG. 1 is a diagram of an architecture of a system according to an embodiment of this application;
FIG. 2 shows a specific architecture according to an embodiment of this application;
FIG. 3 shows another specific architecture according to an embodiment of this application;
FIG. 4A and FIG. 4B are an interaction diagram 1 of a virtual network function deployment method according to an embodiment of this application;
FIG. 5 is an interaction diagram 2 of a virtual network function deployment method according to an embodiment of this application;
FIG. 6 is an interaction diagram 3 of a virtual network function deployment method according to an embodiment of this application;
FIG. 7 is an interaction diagram 4 of a virtual network function deployment method according to an embodiment of this application;
FIG. 8 is a schematic diagram of a structure of a virtual network function deployment apparatus according to an embodiment of this application;
FIG. 9 is a schematic block diagram of an implementation of a network function virtualization device according to an embodiment of this application; and
FIG. 10 is a schematic block diagram of an implementation of a network function virtualization system according to an embodiment of this application.

### DESCRIPTION OF EMBODIMENTS

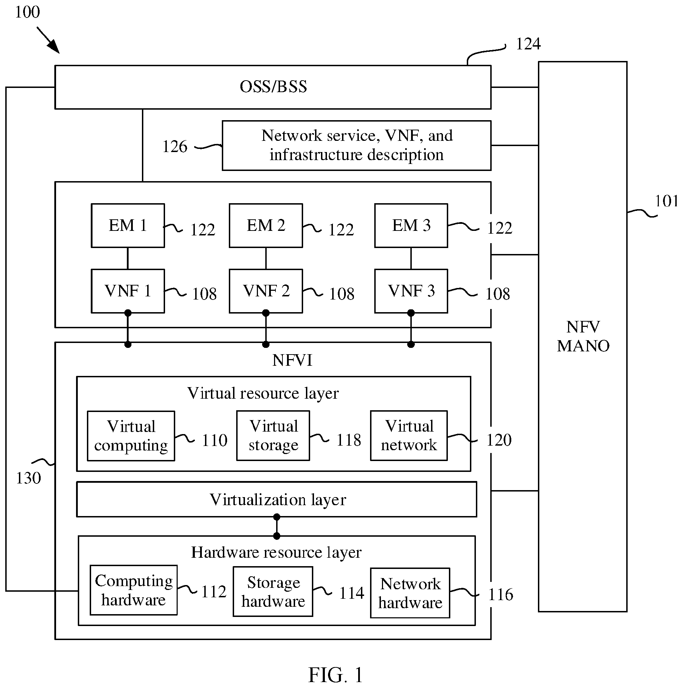

FIG. 1 is a diagram of an architecture of a system according to an embodiment of this application. Refer to FIG. 1. The system 100 in this embodiment of this application is a network function virtualization (network function virtualization, NFV for short) system. The NFV system may be used in various networks, for example, a data center network, an operator network, or a local area network.

The NFV system 100 includes an NFV management and orchestration (NFV management and orchestration, NFV MANO for short) system 101, an NFV infrastructure (NFV Infrastructure, NFVI for short) layer 130, a plurality of virtual network functions (virtual network functions, VNFs for short) 108, a plurality of element managements (Element Managements, EMs for short) 122, a network service, VNF, and infrastructure description (network service, VNF, and infrastructure description) 126, and an operation support system/business support system (operation support system/business support system, OSS/BSS for short) 124. The NFVI 130 includes computing hardware 112, storage hardware 114, network hardware 116, a virtualization layer (Virtualization Layer), virtual computing 110, virtual storage 118, and a virtual network 120. The network service, VNF, and infrastructure description 126 and the OSS/BSS 124 are further discussed in the ETSI GS NFV 002 V1.1.1 standard. Details are not described herein.

The NFVI 130 includes a hardware resource, a software resource, or a combination of a hardware resource and a software resource, to complete deployment of a virtualization environment. In other words, the hardware resource and the virtualization layer are used to provide a virtual resource for the VNF 108, for example, the virtual resource is used as a virtual machine (Virtual Machine, VM for short) or a container (container) in another form. The hardware resource includes the computing hardware 112, the storage hardware 114, and the network hardware 116. The computing hardware 112 may be existing hardware in the market and/or customized hardware, and is configured to provide processing and computing resources. The storage hardware 114 may be a storage capacity provided in a network or a storage capacity (a local memory in a server) resident in the storage hardware 114. In an implementation solution, resources of the computing hardware 112 and the storage hardware 114 may be aggregated together. The network hardware 116 may be a switch, a router, and/or any other network device that is configured to provide a switching function. The network hardware 116 may cross a plurality of domains, and may include a plurality of networks formed by one or more interconnected transport networks.

The virtualization layer in the NFVI 130 can abstract the hardware resource from a physical layer and decouple the VNFs 108, to provide a virtual resource to the VNFs 108. A virtual resource layer includes the virtual computing 110, the virtual storage 118, and the virtual network 120. The virtual computing 110 and the virtual storage 118 may be provided for the VNFs 108 in a form of virtual machines and/or other virtual containers. For example, one or more VNFs 108 may be deployed on a virtual machine (Virtual Machine). The virtualization layer abstracts the network hardware 116 to form the virtual network 120. The virtual network 120 may include a virtual switch (Virtual Switch), and the virtual switch is configured to provide a connection between a virtual machine and another virtual machine. In addition, the transport networks of the network hardware 116 may be virtualized by using a centralized control plane and one independent forwarding plane (for example, a software-defined network (software-defined network, SDN for short)).

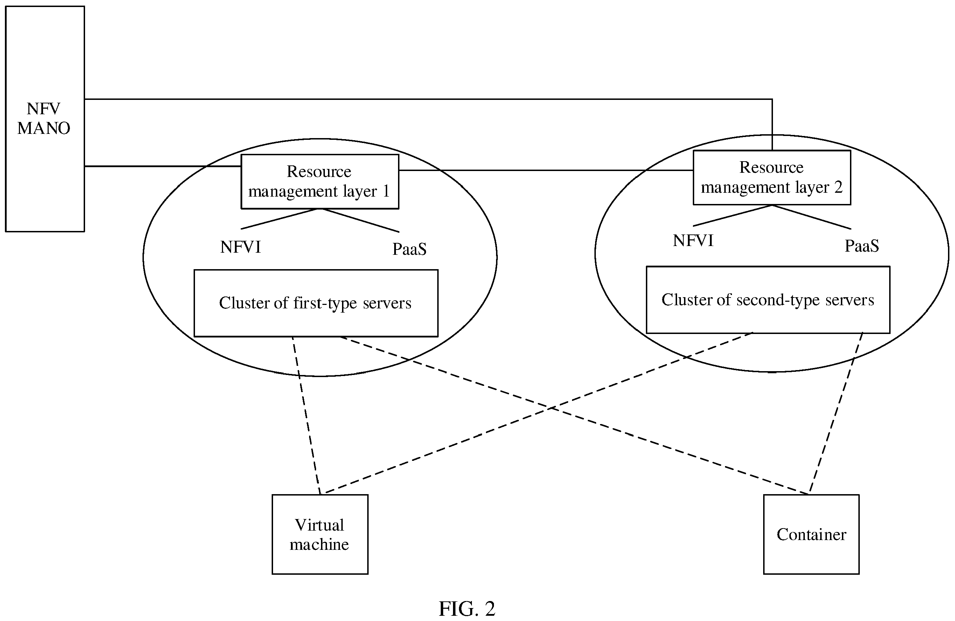

FIG. 2 shows a specific architecture according to an embodiment of this application. Refer to FIG. 2. Computing hardware in this embodiment of this application is provided by a plurality of types of servers (for example, a cluster of first-type servers and a cluster of second-type servers in FIG. 2). Each type of server has a corresponding resource management layer, and resource management layers need to communicate with each other through a network. For example, a resource management layer 1 is configured to manage the cluster of first-type servers, for example, create a VM or a container on the cluster of first-type servers. For example, a resource management layer 2 is configured to manage the cluster of second-type servers, for example, create a VM or a container on the cluster of second-type servers.

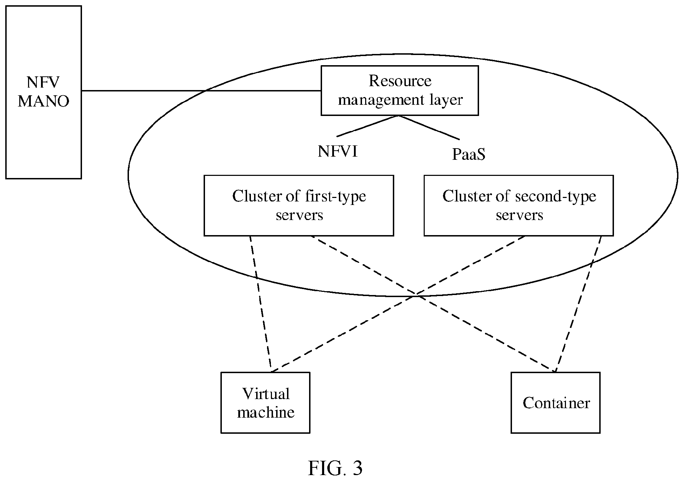

FIG. 3 shows another specific architecture according to an embodiment of this application. Refer to FIG. 3. Computing hardware in this embodiment of this application is provided by a plurality of types of servers (for example, a cluster of first-type servers and a cluster of second-type servers in FIG. 2). The plurality of types of servers correspond to a same resource management layer. The resource management layer has a capability of simultaneously managing the plurality of types of servers.

To better understand this application, the following elements are introduced in this application.

1. Different types of servers in embodiments of this application mean that types of CPUs in the servers are different. For example, a CPU included in one type of server is a CPU in an x86 architecture, and a CPU included in another type of server is a CPU in an ARM architecture.

2. In embodiments of this application, if types of servers on which computing resources of a virtual device 1 and a virtual device 2 are located are the same, and the virtual device 1 and the virtual device 2 are used to deploy a same type of virtual network function VNF, the virtual device 1 and the virtual device 2 are a same type of virtual device.

The virtual device in embodiments of this application may be but is not limited to any one of the following virtual devices: a virtual machine and a container.

3. A server label in embodiments is a label used to indicate a server. A specific form of the server label includes but is not limited to any one of the following: (1) The server label is a label indicating a type of a server, that is, servers of a same type have a same server label. (2) The server label is a label indicating a group of servers, that is, servers of each type may be grouped into a plurality of groups, and servers in each group correspond to a same server label. (3) The server label indicates an area in which a server is located, that is, servers classified into a same area correspond to a same server label. It may be understood that types of the servers classified into the same area are the same.

4. One VNF includes one or more sub-functions. When the VNF includes one sub-function, the sub-function is the VNF. One VNF is deployed on a plurality of virtual devices, and each sub-function of the VNF is deployed on one or more virtual devices.

The VNF may be described by using a virtualized network function descriptor (virtualized network function descriptor, VNFD for short), that is, the VNFD is a configuration template that describes deployment and operation behavior of the VNF. The VNFD includes a plurality of virtualization deployment units (virtualization deployment units, VDUs for short) that can be used to describe each sub-function of the VNF. For each sub-function of the VNF, the VNFD includes one or more (or referred to as one or more types of) VDUs that can be used to describe the sub-function. In embodiments, a VDU that can be used to describe the sub-function of the VNF is referred to as a VDU template. In other words, each sub-function of the VNF corresponds to one or more VDU templates. The VDU template is in a one-to-one correspondence with one or more types of servers. That the VDU template is in a one-to-one correspondence with one or more types of servers means that the VDU template includes one or more pieces of server type indication information, and each piece of server type indication information indicates one server type. The VDU template includes a plurality of configuration items. After the plurality of configuration items are configured, the VDU used to describe the sub-function is obtained, and a virtual device used to deploy the sub-function may be created, based on the VDU used to describe the sub-function, on a server indicated by the server type indication information included in the VDU. If the virtual device is created on an A-type server, this may mean that the virtual device corresponds to the A-type server.

A form of the VNFD includes but is not limited to any one of the following forms.

Form 1: For any first sub-function of the VNF, the VNFD includes a first quantity of VDU templates corresponding to the first sub-function. The first quantity is a quantity of types of servers in an NFV system. The first quantity of VDU templates corresponding to the first sub-function are in a one-to-one correspondence with a first quantity of server types. To be specific, a quantity of VDU templates in the VNFD is equal to a product of the first quantity and a second quantity. The second quantity is a quantity of sub-functions included in the VNF. For example, if a VNF 1 includes 10 sub-functions, and the NFV system includes two types of servers, a VNFD corresponding to the VNF 1 includes 20 VDU templates, and each sub-function corresponds to two VDU templates.

A VDU template 1 named VDU_A_1 and a VDU template 2 named VDU A 2 are provided below. The two VDU templates correspond to a sub-function 1. The VDU template 1 corresponds to a server of an x86 type, and the VDU template 2 corresponds to a server of an ARM type.

### VDU template 1:

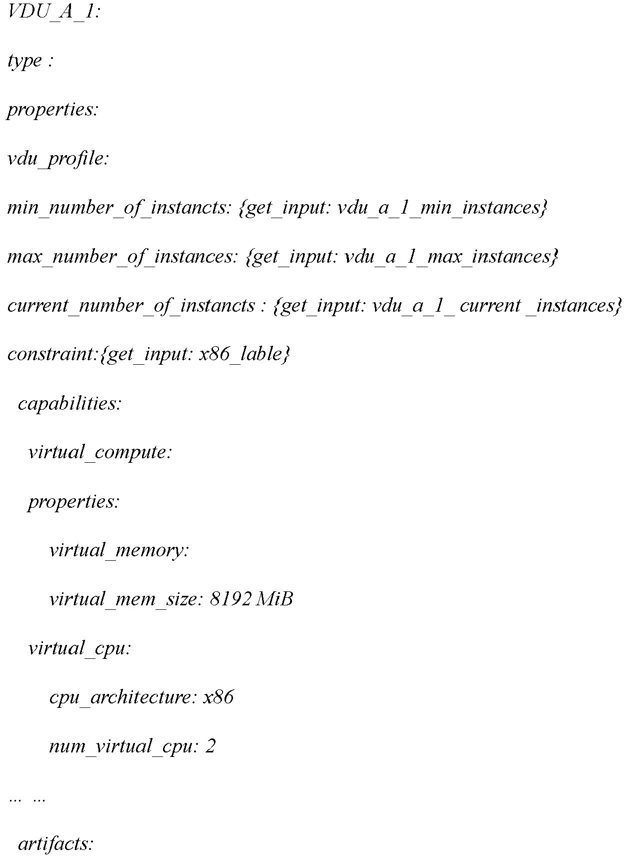

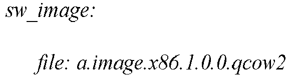

### VDU template 2:

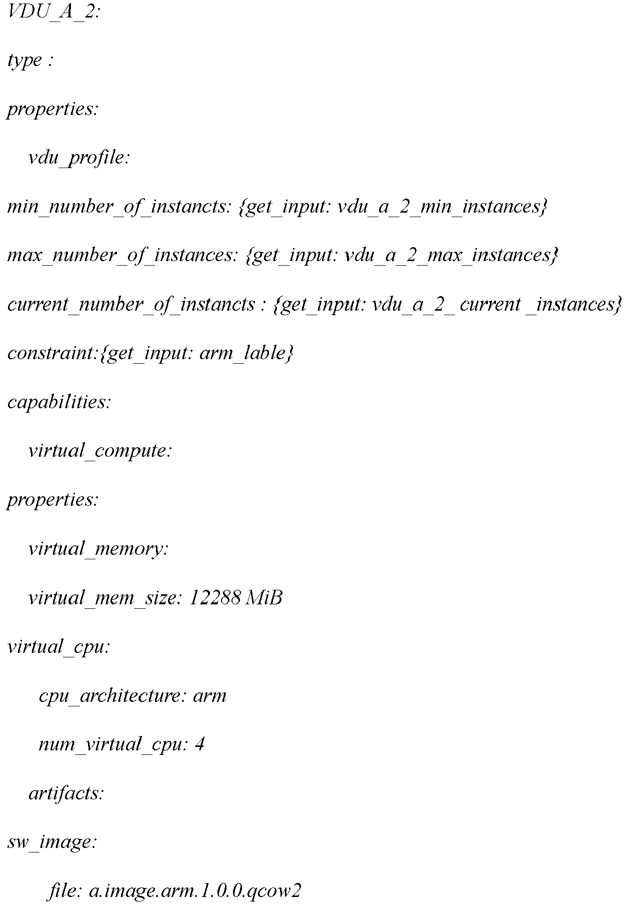

*VDU_A_1* is a name of the VDU template 1, and *type* is a type of the VDU template 1. A name or a type of a VDU template may uniquely identify a VDU template. *min_number_of_instancts: {get_input: vdu_a_1_min_instances}* is a configuration item for a user to configure a minimum quantity of instances. *max number of instances: {get_input: vdu_a_1_max_instances}* is another configuration item for the user to configure a maximum quantity of instances. *current_number_of_instancts: {get_input: vdu*_*a_1_current_instances}* is still another configuration item for the user to configure an actual quantity of instances. *constraint: {get_input: x86_lable}* is yet another configuration item for the user to configure a server label. *cpu_architecture: x86* is server type indication information, that is, the VDU template 1 corresponds to a server of an x86 type. A type of a server that needs to be indicated by a server label configured by the user in *constraint: {get_input: x86_lable}* needs to be the x86 type. *virtual_mem_size: 8192 MiB* and *num_virtual_cpu:* 2 are a resource requirement of a virtual device. *file: a.image.x86.1.0.0.qcow2* is a real name of an image file. The image file is an image file of an operating system (Guest OS) of a virtual device (when the virtual device is a VM), or an image file of an operating system of a virtual device and software that is installed on the virtual device and that is used to implement the sub-function 1 (when the virtual device is a VM), or an image file of a virtual device (when the virtual device is a container).

A VDU 1 that describes a sub-function and that is obtained when the VDU template 1 is configured is shown as follows:

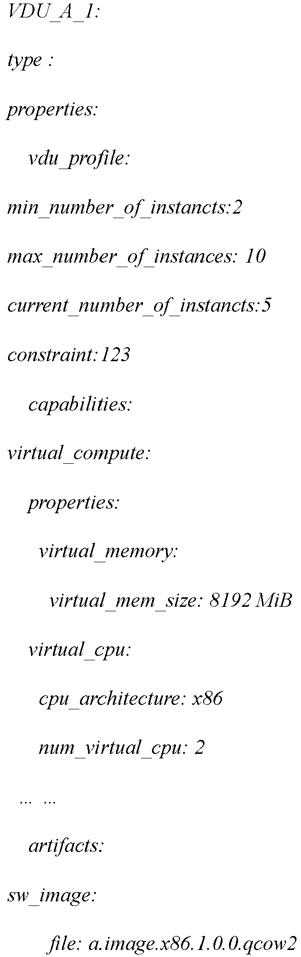

*VDU_A_1* is a name of the VDU, *type* is a type of the VDU, *min_number_of_instancts: 2* indicates that a minimum quantity of instances is 2, *max_number_of_instances: 10* indicates that a maximum quantity of instances is 10, *current_number_of_instancts: 5* indicates that an actual quantity of instances is 5 (the actual quantity of instances is a quantity of to-be-created virtual devices), and a type of a server indicated by *123* in *constraint: 123* is x86. *cpu_architecture: x86* is server type indication information, that is, the configured VDU (a VDU used to describe the sub-function 1) corresponds to a server of an x86 type. A virtual device may be created based on the VDU used to describe the sub-function 1, and there are five to-be-created virtual devices. A resource requirement is *virtual_mem size: 8192 MiB* and *num_virtual_cpu:* 2. A server that provides a computing resource for the virtual device is a server in one or more servers indicated by the server label 123. Real names of image files of operating systems of the five to-be-created virtual devices (for example, five VMs), real names of image files of operating systems of the five to-be-created virtual devices (for example, five VMs) and software that is on the virtual devices and that is used to implement the sub-function 1, or real names of image files of the five to-be-created virtual devices are *file: a.image.x86.1.0.0.qcow2.*

Form 2: The VNF includes a plurality of VNFDs. For any first sub-function of the VNF, each VNFD includes a second quantity of VDU templates, and the VDU templates in each VNFD correspond to a same type of server. The second quantity is a quantity of sub-functions included in the VNF. For example, if a VNF 1 includes 10 sub-functions, and the NFV system includes two types of servers, the VNF 1 corresponds to two VNFDs, each VNFD includes 10 VDU templates, 10 VDU templates in one VNFD correspond to a first-type server, and 10 VDU templates in the other VNFD correspond to a second-type server.

Form 3: A quantity of VDU templates in a VNFD is equal to a second quantity. For example, if a VNF 1 includes 10 sub-functions, a VNFD corresponding to the VNF 1 includes 10 VDU templates, each sub-function corresponds to one VDU template, and one VDU template may correspond to a plurality of types of servers. To be specific, the VDU template may include a plurality of pieces of server type indication information, and each piece of server type indication information indicates one server type. This form is applicable to a case in which virtual devices established on various types of servers have a same resource requirement.

A VDU template in this form is provided below. The VDU template corresponds to a sub-function of the VNF, and the VDU template corresponds to a server of an x86 type and a server of an ARM type.

### VDU template:

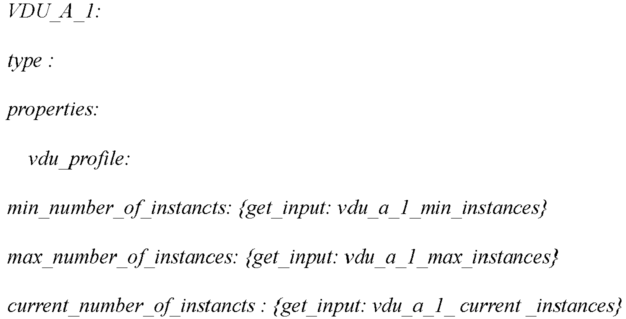

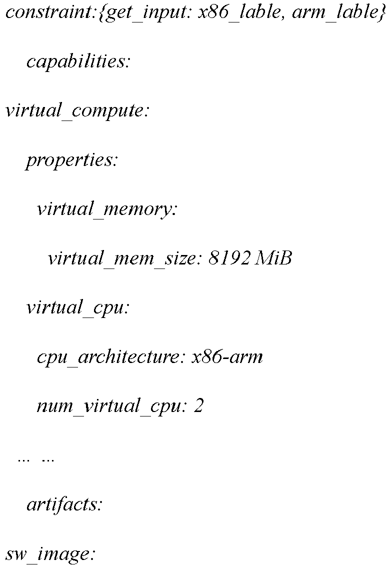

*VDU_A_1* is a name of the VDU template, and *type* is a type of the VDU template. *min_number_of_instancts: {get_input: vdu_a_1_min_instances}* is a configuration item for a user to configure a minimum quantity of instances. *max_number_of_instances: {get_input: vdu_a_1_max_instances}* is another configuration item for the user to configure a maximum quantity of instances. *current_number_of_instancts : {get_input: vdu*_*a*_*1_current_instances}* is still another configuration item for the user to configure an actual quantity of instances. *constraint: {get_input: x86_lable, arm_lable}* is yet another configuration item for the user to configure a server label. *cpu_architecture: x86-arm* is two pieces of server type indication information. A server label configured by the user in *constraint: {get_input: x86_lable, arm_lable}* needs to be a label indicating a server of an x86 type and/or a label indicating a server of an ARM type. *virtual_mem_size: 8192 MiB and num_virtual_cpu:* 2 are a resource requirement of a virtual device. *file: a.image.1.0.0.qcow2* is a virtual name of an image file.

A name or a type of a VDU template or a VDU used to describe a sub-function in the foregoing VNFD form can uniquely identify the VDU template or the VDU used to describe the sub-function. Therefore, an identifier of the VDU in the following embodiments is a name or a type of the VDU.

The following describes a virtual network function deployment method in this application by using specific embodiments.

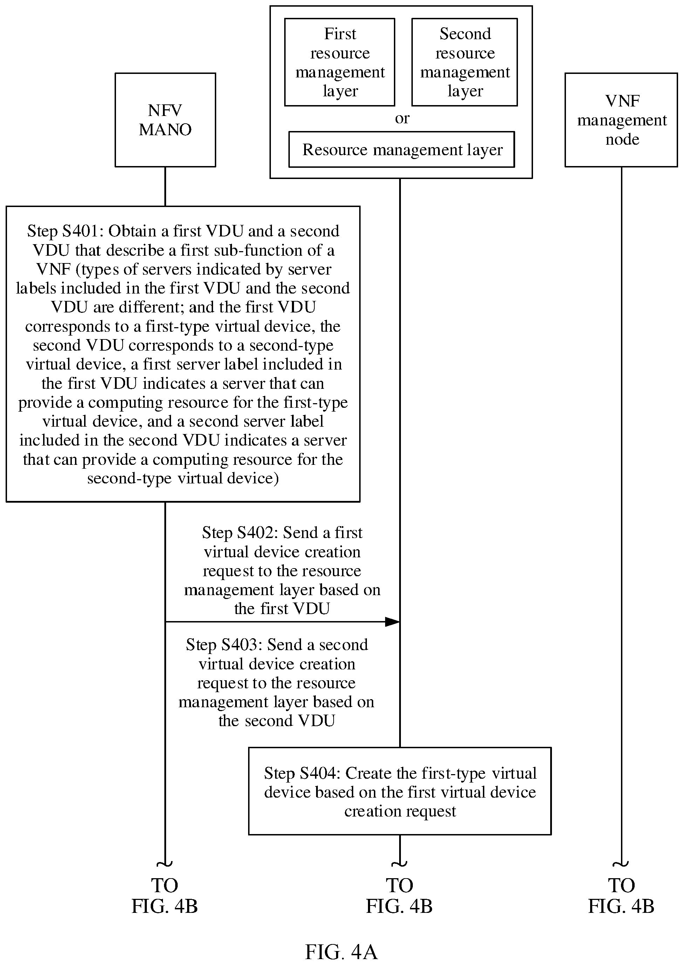

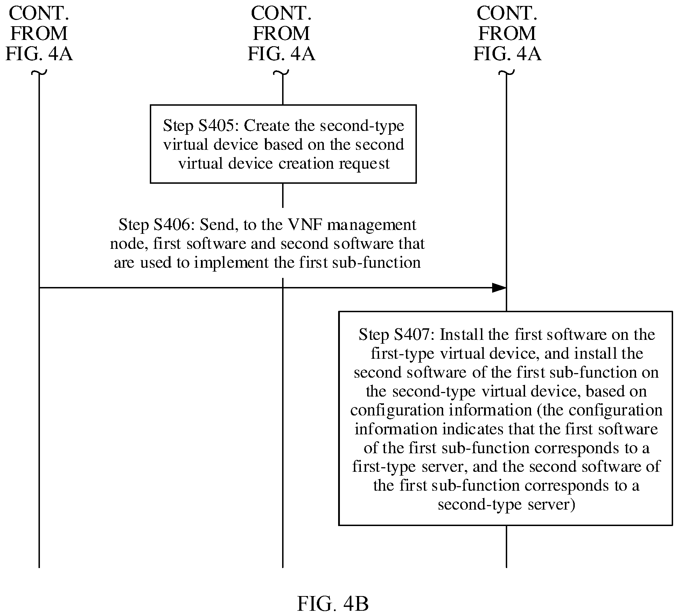

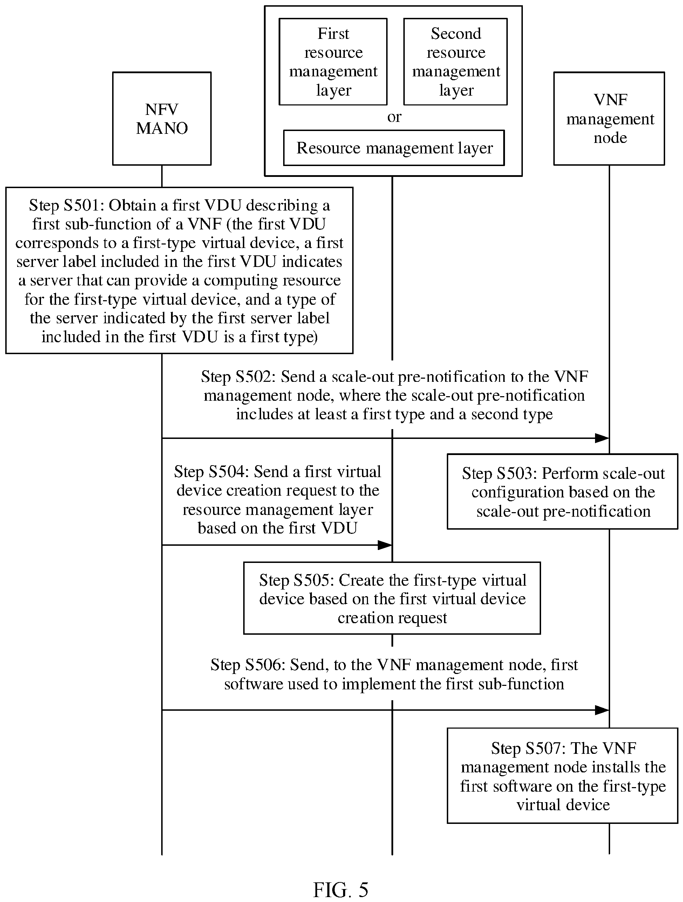

The virtual network function deployment method corresponding to the VNFD in Form 1 or Form 2 is first described with reference to embodiments shown in FIG. 4A and FIG. 4B and FIG. 5.

In a scenario, for the first sub-function of the VNF, the first sub-function of the VNF has not been deployed, and a plurality of types of virtual devices need to be created to deploy the first sub-function. Types of servers that provide computing resources for all types of virtual devices are different. The following describes this scenario with reference to the embodiment shown in FIG. 4A and FIG. 4B.

FIG. 4A and FIG. 4B are an interaction diagram 1 of a virtual network function deployment method according to an embodiment of this application. Refer to FIG. 4A and FIG. 4B. The method in this embodiment includes the following steps.

Step S401: An NFV MANO obtains a first VDU and a second VDU that describe a first sub-function of a VNF, where types of servers indicated by server labels included in the first VDU and the second VDU are different; and the first VDU corresponds to a first-type virtual device, the second VDU corresponds to a second-type virtual device, a first server label included in the first VDU indicates a server that can provide a computing resource for the first-type virtual device, and a second server label included in the second VDU indicates a server that can provide a computing resource for the second-type virtual device.

The first VDU and the second VDU in this embodiment may be referred to as two types of VDUs.

Before the NFV MANO obtains the first VDU and the second VDU that describe the first sub-function of the VNF, a VNFD describing the VNF is uploaded to the NFV MANO, that is, the NFV MANO obtains the VNFD describing the VNF. A form of the VNFD describing the VNF is Form 1 or Form 2 described above. After the NFV MANO obtains the VNFD describing the VNF, for the first sub-function of the NFV, the NFV MANO obtains the first VDU and the second VDU that describe the first sub-function of the VNF

An image file used to create the first-type virtual device and an image file used to create the second-type virtual device are also uploaded to the NFV MANO, where corresponding image files used to create all first-type virtual devices are the same, and corresponding image files used to create all second-type virtual devices are the same. That is, the NFV MANO obtains the image file used to create the first-type virtual device and the corresponding image file used to create the second-type virtual device. When the virtual device is a VM, details are as follows: (1) The image file used to create the virtual device may be an image file of an operating system of the virtual device. (2) The image file used to create the virtual device is an image file of an operating system of the virtual device and software that is installed on the virtual device and that is used to implement the sub-function 1. (3) When the virtual device is a container, the image file used to create the virtual device is an image file of the container, and the image file of the container includes software used to implement the first sub-function. It may be understood that an image file used to create a virtual device that deploys another sub-function of the VNF is also uploaded to the NFV MANO. For each sub-function of the VNF, a type of the image file used to create the virtual device that deploys the sub-function may be the same as a type of a server included in an NFVI.

In a manner, the NFV MANO sends each image file used to create a virtual device to a resource management layer, where each image file used to create the virtual device is stored in a mirror repository corresponding to the resource management layer.

Optionally, when the virtual device is the VM, first software that is used to implement the first sub-function and that can be installed on the first-type virtual device and second software that is used to implement the first sub-function and that can be installed on the second-type virtual device are also uploaded to the NFV MANO (for example, uploaded to a VNFM in the NFV MANO). To be specific, the NFV MANO obtains various types of software used to implement the first sub-function: software that can be installed on the first-type virtual device and software that can be installed on the second-type virtual device. It may be understood that software used to implement another sub-function of the VNF is also uploaded to the NFV MANO. For each sub-function of the VNF, a type of the software used to implement the sub-function is the same as a type of a server included in an NFVI.

The following describes a manner in which the NFV MANO obtains the first VDU and the second VDU that describe the first sub-function of the VNF

A manner in which the NFV MANO obtains the first VDU describing the first sub-function of the VNF includes a1 to a3.

a1: The NFV MANO obtains a first server label corresponding to a first VDU template.

A user may enter the first server label on the first VDU template that is displayed in a user interface corresponding to the NFV MANO and that is used to describe the first sub-function, and the NFV MANO obtains the first server label corresponding to the first VDU template.

a2: The NFV MANO obtains first instance information corresponding to the first VDU template.

The user may enter the first instance information on the first VDU template that is displayed in the user interface corresponding to the NFV MANO and that is used to describe the first sub-function, and the NFV MANO obtains the first instance information. The first instance information includes an actual quantity of instances, and may further include at least one of the following: a maximum quantity of instances and a minimum quantity of instances.

a3: The NFV MANO adds the first server label and the first instance information to the first VDU template to generate the first VDU.

It may be understood that a process in which the NFV MANO obtains the first VDU describing the first sub-function of the VNF is a process in which the first VDU template is configured.

A manner in which the NFV MANO obtains the second VDU describing the first sub-function of the VNF includes b1 to b3.

b1: The NFV MANO obtains a second server label corresponding to a second VDU template.

A user may enter the second server label on the second VDU template that is displayed in a user interface corresponding to the NFV MANO and that is used to describe the first sub-function, and the NFV MANO obtains the second server label corresponding to the second VDU template.

b2: The NFV MANO obtains second instance information corresponding to the second VDU template.

The user may enter the second instance information on the second VDU template that is displayed in the user interface corresponding to the NFV MANO and that is used to describe the first sub-function, and the NFV MANO obtains the second instance information. The second instance information includes an actual quantity of instances, and may further include at least one of the following: a maximum quantity of instances and a minimum quantity of instances.

b3: The NFV MANO adds the second server label and the second instance information to the second VDU template to generate the second VDU.

Step S402: The NFV MANO sends a first virtual device creation request to a resource management layer based on the first VDU.

The first virtual device creation request includes an actual quantity of instances that is included in the first VDU (that is, a quantity of to-be-created first-type virtual devices), the first server label, a resource requirement included in the first VDU (that is, a resource requirement of each first-type virtual device), and a real name that is of an image file and that is included in the first VDU.

For the resource management layer, when the virtual device is a VM, the resource management layer is an NFVI; or when the virtual device is a container, the resource management layer is a PasS (platform as a service).

Step S403: The NFV MANO sends a second virtual device creation request to a resource management layer based on the second VDU.

The second virtual device creation request includes an actual quantity of instances that is included in the second VDU (that is, a quantity of to-be-created second-type virtual devices), the second server label, a resource requirement included in the second VDU (that is, a resource requirement of each second-type virtual device), and a real name that is of an image file and that is included in the second VDU.

It may be understood that, if the method in this embodiment corresponds to the specific architecture shown in FIG. 2, the NFV MANO sends the first virtual device creation request to a first resource management layer based on the first VDU, and the NFV MANO sends the second virtual device creation request to a second resource management layer based on the second VDU. The first resource management layer is configured to manage a first-type server, and the second resource management layer is configured to manage a second-type server. If the method in this embodiment corresponds to the specific architecture shown in FIG. 3, in a manner, the NFV MANO sends the first virtual device creation request and the second virtual device creation request to a same resource management layer.

It may be understood that, if the method in this embodiment corresponds to the specific architecture shown in FIG. 3, in another manner, the NFV MANO may send a virtual device creation request based on the first VDU and the second VDU, where the virtual device creation request includes the content included in the first virtual device creation request and the second virtual device creation request.

It may be understood that, if the method in this embodiment corresponds to the specific architecture shown in FIG. 3, in still another manner, the NFV MANO may send a virtual device creation request based on a VDU describing each sub-function of the VNF, where the virtual device creation request includes the content included in the first virtual device creation request and the second virtual device creation request, and further includes an actual quantity of instances, a server label, a resource requirement, and a real name of an image file that are in a VDU describing another sub-function.

Step S404: The resource management layer creates the first-type virtual device based on the first virtual device creation request.

The NFVI includes one or more servers whose labels are first server labels. The resource management layer selects a first target server from the servers indicated by the first server labels (a type of the first target server is a first type). There may be one or more first target servers. The resource management layer allocates a resource on the first target server based on the resource requirement included in the first virtual device creation request, and obtains, from the mirror repository based on the real name that is of the image file and that is included in the first virtual device creation request, the image file whose name is the real name. The resource management layer installs the obtained image file on the first target server to create the first-type virtual device.

When the virtual device is the VM, if the image file obtained by the resource management layer is an image file of an operating system of the first-type virtual device, the resource management layer installs the obtained image file on the first target server to create the first-type virtual device. If the image file obtained by the resource management layer is an image file of software used to implement the first sub-function and an operating system of the virtual device, after installing the obtained image file on the first target server, the resource management layer not only creates the first-type virtual device, but also completes installation of the software on the first-type virtual device. When the virtual device is the container, because the image file of the container includes software used to implement the first sub-function, after installing the obtained image file on the first target server, the resource management layer not only creates the first-type virtual device, but also completes installation of the software on the first-type virtual device.

Step S405: The resource management layer creates the second-type virtual device based on the second virtual device creation request.

The NFVI includes one or more servers whose labels are second server labels. The resource management layer selects a second target server from the servers indicated by the second server labels (it can be learned that a type of the second target server is a second type). There may be one or more second target servers. The resource management layer allocates a resource on the second target server based on the resource requirement included in the second virtual device creation request, and obtains, from the mirror repository based on the real name that is of the image file and that is included in the second virtual device creation request, the image file whose name is the real name. The resource management layer installs the obtained image file on the second target server to create the second-type virtual device.

Similarly, when the virtual device is the VM, if the image file obtained by the resource management layer is an image file of an operating system of the second-type virtual device, the resource management layer installs the obtained image file on the second target server to create the second-type virtual device. If the image file obtained by the resource management layer is an image file of software used to implement the first sub-function and an operating system of the virtual device, after installing the obtained image file on the second target server, the resource management layer not only creates the second-type virtual device, but also completes installation of the software on the second-type virtual device. When the virtual device is the container, because the image file of the container includes software used to implement the first sub-function, after installing the obtained image file on the second target server, the resource management layer not only creates the second-type virtual device, but also completes installation of the software on the second-type virtual device.

It may be understood that, if the method in this embodiment corresponds to the specific architecture shown in FIG. 2, the first resource management layer creates the first-type virtual device based on the first virtual device creation request, and the second resource management layer creates the second-type virtual device based on the second virtual device creation request. If the method in this embodiment corresponds to the specific architecture shown in FIG. 3, a same resource management layer creates the first-type virtual device based on the first virtual device creation request, and creates the second-type virtual device based on the second virtual device creation request.

Step S406: The NFV MANO sends, to a VNF management node, first software and second software that are used to implement the first sub-function.

The first software is software installed on the first-type virtual device, and the second software is software installed on the second-type virtual device.

In a manner, the VNF management node obtains software in a first preset directory and software in a second preset directory based on a preset FTP address. The NFV MANO sends the software in the first preset directory and the software in the second preset directory to the VNF management node. The software in the first preset directory is the first software used to implement the first sub-function, and the software in the second preset directory is the second software used to implement the first sub-function.

In another manner, the NFV MANO sends a correspondence between a software name, a sub-function, and a server type to the VNF management node. The correspondence may be obtained when the NFV MANO extracts a software name, sub-function indication information, and server type indication information from each VDU in the VNFD. The VNF management node obtains, from the NFV MANO based on the correspondence, the first software and the second software that are used to implement the first sub-function.

Step S407: The VNF management node installs the first software on the first-type virtual device, and installs the second software of the first sub-function on the second-type virtual device, based on configuration information, where the configuration information indicates that the first software of the first sub-function corresponds to the first-type server, and the second software of the first sub-function corresponds to the second-type server.

The VNF management node determines, based on the configuration information, that the first software of the first sub-function corresponds to the first-type server, and the first-type virtual device is a virtual device on the corresponding first-type server. Therefore, the VNF management node installs the first software on the first-type virtual device. Similarly, the VNF management node determines, based on the configuration information, that the second software of the second sub-function corresponds to the second-type server, and the second-type virtual device is a virtual device on the corresponding second-type server. Therefore, the VNF management node installs the second software on the second-type virtual device.

In a manner, the NFV MANO sends a correspondence between a software name, a sub-function, and a server type to the VNF management node, where and the correspondence is the configuration information.

It may be understood that step S406 and step S407 are optional. Step S406 and step S407 are performed when the virtual device is a VM and the image file corresponding to the virtual device is an image file of an operating system of the virtual device.

In this embodiment, two VDUs that describe a same sub-function are obtained, and types of servers indicated by server labels included in both of the two VDUs are different, so that the resource management layer can respectively create virtual devices on two types of servers based on the two VDUs. Therefore, the same sub-function can be deployed on the two types of servers. In this way, VNF deployment is flexible, and there is no limitation that the VNF can be deployed on only one type of server.

It may be understood that the embodiment shown in FIG. 4A and FIG. 4B is an example of VNF deployment, and the same sub-function is not limited to being deployed on the two types of servers. If there are more than two types (for example, N types, where N is greater than 2) of servers included in the NFVI, three VDUs, four VDUs, or the like that describe the same sub-function may be obtained, that is, n (n<N) VDUs that describe the same sub-function may be obtained, and types of servers indicated by server labels included in the VDUs are different, so that the resource management layer can respectively create virtual devices on n types of servers based on the n VDUs. Therefore, the same sub-function can be deployed on a plurality of types of servers, and VNF deployment is flexible.

In another scenario, the VNFD corresponding to the VNF includes at least a second VDU used to describe the first sub-function of the VNF, the first sub-function of the VNF has been deployed on at least a second-type virtual device created based on the second VDU, and a server on which a computing resource of the second-type virtual device is located is a second-type server, that is, a type of a server indicated by a second server label included in the second VDU is a second type. Because a service volume corresponding to the first sub-function of the VNF increases, more virtual devices need to be created to deploy the first sub-function. A to-be-created virtual device includes a first-type virtual device, and a server that provides a computing resource for the first-type virtual device is a first-type server. The following describes this scenario with reference to the embodiment shown in FIG. 5.

FIG. 5 is an interaction diagram 2 of a virtual network function deployment method according to an embodiment of this application. Refer to FIG. 5. The method in this embodiment includes the following steps.

Step S501: An NFV MANO obtains a first VDU describing a first sub-function of a VNF, where the first VDU corresponds to a first-type virtual device, a first server label included in the first VDU indicates a server that can provide a computing resource for the first-type virtual device, and a type of the server indicated by the first server label included in the first VDU is a first type.

For a specific implementation of this step, refer to related descriptions in step S401. Details are not described herein again.

Optionally, before the NFV MANO obtains the first VDU describing the first sub-function of the VNF, a VNFD describing the VNF is updated. For example, when a form of the VNFD describing the VNF is Form 2 described above, all added and included VDU templates correspond to a VNFD of a first-type service, that is, the NFV MANO obtains a new VNFD describing the VNF. When a form of the VNFD describing the VNF is Form 1 described above, there is no process of obtaining a new VNFD describing the VNF

An image file used to create the first-type virtual device is uploaded to the NFV MANO, where corresponding image files used to create all first-type virtual devices are the same. That is, the NFV MANO obtains the image file used to create the first-type virtual device. For each sub-function of the VNF, a type of the image file used to create the virtual device that deploys the sub-function is the same as a type of a server included in an NFVI.

In a manner, the NFV MANO sends the image file used to create the first-type virtual device to a resource management layer, where the image file used to create the first-type virtual device is stored in a mirror repository corresponding to the resource management layer.

Optionally, when the virtual device is a VM, first software that is used to implement the first sub-function and that can be installed on the first-type virtual device is also uploaded to the NFV MANO (for example, uploaded to a VNFM in the NFV MANO). To be specific, the NFV MANO obtains the first software that is used to implement the first sub-function and that can be installed on the first-type virtual device. For each sub-function of the VNF, a type of the software used to implement the sub-function is the same as a type of a server included in an NFVI.

Step S502: The NFV MANO sends a scale-out pre-notification to a VNF management node, where the scale-out pre-notification includes at least a first type and a second type.

Step S503: The VNF management node performs scale-out configuration based on the scale-out pre-notification.

Scale-out configuration includes: The VNF management node installs software used to support normal running of a service on a virtual device on a first-type server.

Step S504: The NFV MANO sends a first virtual device creation request to a resource management layer based on the first VDU.

For a specific implementation of this step, refer to related descriptions in step S402. Details are not described herein again.

Step S505: The resource management layer creates the first-type virtual device based on the first virtual device creation request.

For a specific implementation of this step, refer to related descriptions in step S404. Details are not described herein again.

Step S506: The NFV MANO sends, to the VNF management node, first software used to implement the first sub-function.

The first software of the first sub-function is software that needs to be installed on the first-type virtual device.

In a manner, the VNF management node obtains software in a first preset directory based on a preset FTP address, and the NFV MANO sends the software in the first preset directory to the VNF management node. The software in the first preset directory is the first software used to implement the first sub-function.

In another manner, the NFV MANO sends a correspondence between a software name, a sub-function, and a server type to the VNF management node. The correspondence may be obtained when the NFV MANO extracts a software name, sub-function indication information, and server type indication information from each VDU in the VNFD. The VNF management node obtains, from the NFV MANO based on the correspondence, software that is not stored, where the software that is not previously stored includes the first software used to implement the first sub-function.

Step S507: The VNF management node installs the first software on the first-type virtual device.

In this embodiment, another VDU describing a sub-function of the VNF is obtained to implement scale-out of the sub-function of the VNF, and a type of a server indicated by a server label in the obtained another VDU is different from a type of a server corresponding to a virtual device on which the sub-function of the VNF has been deployed, so that the resource management layer can create a virtual device on another type of server. Therefore, a same sub-function can be deployed on two types of servers. In this way, VNF deployment is flexible, and there is no limitation that the VNF can be deployed on only one type of server.

It may be understood that the embodiment shown in FIG. 5 is an example of scaling out the sub-function of the VNF. In a scale-out process, another VDU describing the sub-function is not necessarily newly obtained, and two VDUs, three VDUs, or the like that describe the sub-function may be newly obtained. To be specific, one type of virtual device is not necessarily newly created on one type of server, and two types of virtual devices may be newly created respectively on two types of servers, or three types of virtual devices may be newly created respectively on three types of servers. To be specific, if there are more than two types (for example, N types, where N is greater than 2) of servers included in the NFVI, m (m ≤ N - M) (M is a quantity of types of servers on which the sub-function has been deployed) new VDUs that describe the sub-function may be obtained, and types of servers indicated by server labels included in the m new VDUs that describe the sub-function are different, so that the resource management layer can respectively create, based on the m new VDUs that describe the sub-function, new virtual devices on m types of servers to deploy the sub-function. Therefore, a same sub-function can be deployed on a plurality of types of servers, and VNF deployment is flexible.

According to the VNF deployment method in the embodiment shown in FIG. 4A and FIG. 4B or FIG. 5, after VNF deployment is completed, the VNF can run. In a VNF running process, scaling may need to be performed on a virtual device used to deploy the VNF (for ease of description, the virtual device used to deploy the VNF is subsequently referred to as a virtual device corresponding to the VNF). Scaling on the virtual device is scaling out virtual devices (increasing a quantity of virtual devices) or scaling in virtual devices (reducing a quantity of virtual devices). The following describes, by using specific embodiments, a process in which the NFV MANO performs scaling on the virtual device used to deploy the VNF

The NFV MANO determines, based on a key performance indicator (key performance indicator, KPI for short), whether scaling needs to be performed on a virtual device corresponding to the VNF. There are two types of KPIs. A first type of KPI is resource utilization (for example, CPU usage and memory usage). This type of KPI may be specific to one type of virtual device. A second type of KPI is a service indicator obtained through statistics collection based on service information, for example, a call drop rate and a success rate. This type of KPI is usually obtained by collecting statistics about service information of a plurality of types of virtual devices corresponding to the VNF by the VNF management node. There are a plurality of types of KPIs of the service indicator types. For example, a call drop rate is a type of KPI, and a success rate is a type of KPI.

In a manner, the resource utilization is sent by the resource management layer to the NFV MANO. To be specific, when the KPI is the resource utilization, the NFV MANO obtains the KPI sent by the resource management layer. When the KPI is the service indicator, the NFV MANO obtains the KPI obtained by the VNF management node through statistics collection based on the service information.

The following describes several specific cases in which the NFV MANO performs scaling on the virtual device corresponding to the VNF

### Case 1:

The NFV MANO obtains first resource utilization that is of a target-type virtual device corresponding to the VNF and that is sent by the resource management layer, and when the first resource utilization is greater than or equal to preset resource utilization, the NFV MANO determines that target-type virtual devices need to be scaled out. The NFV MANO determines an increased quantity of target-type virtual devices based on the first resource utilization. Then, the NFV MANO sends a virtual device scale-out request to the resource management layer based on a VDU corresponding to the target-type virtual device, where the virtual device scale-out request includes the increased quantity of target-type virtual devices, a server label in the VDU corresponding to the target-type virtual device, a resource requirement in the VDU corresponding to the target-type virtual device, and a real name that is of an image file and that is in the VDU corresponding to the target-type virtual device. The resource management layer creates a new target-type virtual device based on the virtual device scale-out request. The VNF management node obtains, from the NFV MANO, software installed on the target-type virtual device, and installs the software on the new target-type virtual device.

The NFV MANO obtains first resource utilization that is of a target-type virtual device corresponding to the VNF and that is sent by the resource management layer, and when the first resource utilization is less than preset resource utilization, the NFV MANO determines that target-type virtual devices need to be scaled in. The NFV MANO determines a reduced quantity of target-type virtual devices and an identifier of a to-be-deleted virtual device based on the first resource utilization. Then, the NFV MANO sends a virtual device scale-in request to the resource management layer, where the virtual device scale-in request includes the identifier of the to-be-deleted virtual device, and the resource management layer deletes the virtual device indicated by the identifier.

A method in which the NFV MANO performs scaling control on the target-type virtual device is provided above. The target-type virtual device may be any type of virtual device in various types of virtual devices that deploy sub-functions of the VNF

Case 2: An application scenario of this case is as follows: The NFV MANO obtains a first-type KPI sent by the VNF management node, where the first-type KPI is obtained by collecting statistics about service information of a plurality of types of virtual devices corresponding to the VNF. The NFV MANO determines, based on the first-type KPI, that scaling needs to be performed on a virtual device corresponding to the VNF. That is, the KPI in this case is a KPI of a service indicator type. The first-type KPI in this embodiment is any one type of a plurality of types of KPIs of service indicator types.

In this case, the NFV MANO stores first scaling information corresponding to various types of KPIs. For each type of KPI, first scaling information corresponding to the type of KPI includes identifiers of VDUs corresponding to various types of scalable virtual devices when the KPI obtained by the NFV MANO is of the type, and sub-functions corresponding to the VDUs corresponding to the various types of scalable virtual devices are different. That is, VDUs indicated by the first scaling information correspond to different sub-functions. The identifier of the VDU is a type or a name of the VDU.

In this case, the NFV MANO performs scaling control on various types of virtual devices corresponding to the VDUs indicated by the first scaling information corresponding to the first-type KPI.

For a method in which the NFV MANO performs scaling control on the various types of virtual devices corresponding to the VDUs indicated by the first scaling information corresponding to the first-type KPI, refer to the method in which the NFV MANO performs scaling control on the target-type virtual device. Details are not described herein again.

In Case 2, efficiency of performing scaling control on the virtual device corresponding to the VNF is high.

Case 3: An application scenario of this case is as follows: The NFV MANO obtains a first-type KPI sent by the VNF management node, where the first-type KPI is obtained by collecting statistics about service information of a plurality of types of virtual devices corresponding to the VNF. The NFV MANO determines, based on the first-type KPI, that scaling needs to be performed on a virtual device corresponding to the VNF. That is, the KPI in this case is a KPI of a service indicator type. The first-type KPI in this embodiment is any one type of a plurality of types of KPIs of service indicator types.

In this case, the NFV MANO stores second scaling information corresponding to various types of KPIs. For each type of KPI, second scaling information corresponding to the type of KPI includes identifiers of VDUs corresponding to various types of scalable virtual devices when the KPI obtained by the NFV MANO is of the type, and the VDUs corresponding to the various types of scalable virtual devices include VDUs corresponding to a same sub-function. For example, when the KPI is a call drop rate, the second scaling information corresponding to the KPI includes a VDU 1, a VDU 2, a VDU 3, and a VDU 4. The VDU 1 and the VDU 2 are used to describe a same sub-function and correspond to different types of servers. The VDU 3 and the VDU 4 are used to describe a same sub-function and correspond to different types of servers.

For a type of virtual device corresponding to any VDU indicated by the second scaling information corresponding to the first-type KPI, details are as follows:
(1) The NFV MANO sends a pre-scaling request to the VNF management node, where the pre-scaling request includes an identifier of a VDU corresponding to the type of virtual device.
(2) The VNF management node receives the pre-scaling request from the NFV MANO.
(3) If the VNF management node determines that no notification message indicating that the NFV MANO is allowed to perform scaling on another type of virtual device corresponding to a same sub-function as the type of virtual device is sent to the NFV MANO in a current scaling period, the VNF management node sends a first-type notification message to the NFV MANO.
   That the VNF management node determines that no notification message indicating that the NFV MANO is allowed to perform scaling on another type of virtual device corresponding to a same sub-function as the type of virtual device is sent to the NFV MANO in a current scaling period means as follows: (1) After receiving the pre-scaling request, the VNF management node determines that another pre-scaling request is received in the current scaling period, where a sub-function corresponding to a VDU indicated by an identifier that is of the VDU and that is included in the another pre-scaling request is the same as a sub-function corresponding to the VDU indicated by the identifier that is of the VDU and that is included in the pre-scaling request. After receiving the another pre-scaling request, the VNF management node sends a second-type notification message to the NFV MANO, where the second-type notification message indicates not to perform scaling control on a virtual device corresponding to the identifier that is of the VDU and that is included in the pre-scaling request. (2) Alternatively, after receiving the pre-scaling request, the VNF management node determines that another pre-scaling request is not received in the current scaling period, where a sub-function corresponding to a VDU indicated by an identifier that is of the VDU and that is included in the another pre-scaling request is the same as a sub-function corresponding to the VDU indicated by the identifier that is of the VDU and that is included in the pre-scaling request.
   Correspondingly, the NFV MANO receives the first-type notification message from the VNF management node, where the first-type notification message indicates the NFV MANO to perform scaling control on one type of virtual device corresponding to the VDU indicated by the identifier that is of the VDU and that is included in the pre-scaling request. Therefore, the NFV MANO performs scaling control on the type of virtual device.
(4) If the VNF management node determines that a notification message indicating that the NFV MANO is allowed to perform scaling on another type of virtual device corresponding to a same sub-function as the type of virtual device is sent to the NFV MANO in a current scaling period, the VNF management node sends a second-type notification message to the NFV MANO.

That the VNF management node determines that a notification message indicating that the NFV MANO is allowed to perform scaling on another type of virtual device corresponding to a same sub-function as the type of virtual device is sent to the NFV MANO in a current scaling period means as follows: After receiving the pre-scaling request, the VNF management node determines that another pre-scaling request is received in the current scaling period, where a sub-function corresponding to a VDU indicated by an identifier that is of the VDU and that is included in the another pre-scaling request is the same as a sub-function corresponding to the VDU indicated by the identifier that is of the VDU and that is included in the pre-scaling request. After receiving the another pre-scaling request, the VNF management node sends a first-type notification message to the NFV MANO.

Correspondingly, the NFV MANO receives the second-type notification message from the VNF management node, that is, the NFV MANO does not perform scaling control on the type of virtual device.

Optionally, the scaling period may be any value in 3s to 8s.

To be specific, in Case 3, the VNF management node determines a type of virtual device on which scaling is to be performed. In other words, the VNF management node determines a type of virtual device that corresponds to a VDU and on which scaling is to be performed. In addition, for one sub-function of the VNF, the VNF management node controls to perform, in one scaling period, scaling on only one type of virtual device corresponding to one of a plurality of VDUs corresponding to the sub-function. This greatly reduces a probability that virtual devices corresponding to a specific sub-function are excessively scaled out or scaled in, and ensures normal running of the VNF

### Case 4:

An application scenario of this case is as follows: The NFV MANO obtains a first-type KPI sent by the VNF management node, where the first-type KPI is obtained by collecting statistics about service information of a plurality of types of virtual devices corresponding to the VNF. The NFV MANO determines, based on the first-type KPI, that scaling needs to be performed on a virtual device corresponding to the VNF. That is, the KPI in this case is a KPI of a service indicator type. The first-type KPI in this embodiment is any one type of a plurality of types of KPIs of service indicator types.

In this case, a VNFD describing the VNF is improved as follows: A plurality of pieces of indication information is added to the VNFD, and the indication information is used to indicate VDUs corresponding to a same sub-function.

Optionally, each VDU corresponds to one piece of indication information. The indication information may be located at a tail or a head of the VDU.

Some content of an improved VNFD is shown as follows: 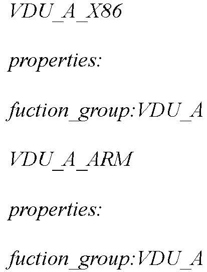 *"fuction_group:VDU_A"* is indication information, indicating that *VDU_A_X86* and *VDU_A_ARM* belong to a group *VDU_A,* and *VDU_A_X86* and *VDU_A_ARM* correspond to a same sub-function.

Optionally, VDUs corresponding to a same sub-function correspond to one piece of indication information. Some content of another improved VNFD is shown as follows:

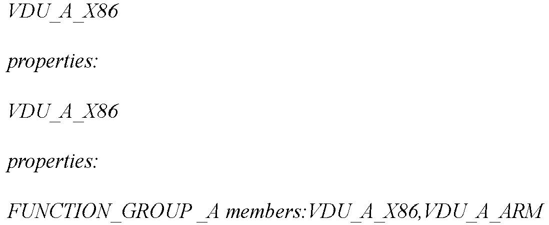

"*FUNCTION_GROUP _A members:VDU_A_X86,VDU_A_ARM*" indicates that *VDU_A_X86* and *VDU_A_ARM* belong to a group, and *VDU_A_X86* and *VDU_A_ARM* correspond to a same sub-function.

Corresponding to this case, the NFV MANO determines, based on the indication information in the VNFD and the second scaling information corresponding to the first-type KPI, to perform scaling control on one type of virtual device corresponding to one of at least two VDUs corresponding to a same sub-function in VDUs indicated by the second scaling information corresponding to the first-type KPI.

For example, the KPI is a success rate obtained by collecting statistics about service information of a plurality of types of virtual devices that is included in the VNF. The second scaling information corresponding to the KPI includes an identifier of VDU_A_X86, an identifier of VDU_A_ARM, an identifier of VDU_B_X86, and an identifier of VDU_B_ARM, VDU_A_X86 and VDU_A_ARM correspond to a same sub-function, and VDU_B_X86 and VDU_B_ARM correspond to a same sub-function. In this case, the NFV MANO performs scaling control on one type of virtual device corresponding to VDU_A_X86 or one type of virtual device corresponding to VDU_A_ARM, and the NFV MANO performs scaling control on one type of virtual device corresponding to VDU_B_X86 or one type of virtual device corresponding to VDU_B_ARM.

To be specific, in Case 4, the NFV MANO determines, based on the indication information in the VNFD, a type of virtual device on which scaling is to be performed. In addition, for one sub-function of the VNF, the NFV MANO performs scaling control on only one type of virtual device corresponding to one of a plurality of VDUs corresponding to the sub-function. This greatly reduces a probability that virtual devices corresponding to a specific sub-function are excessively scaled out or scaled in, and ensures normal running of the VNF

This embodiment provides a specific implementation in which the NFV MANO performs scaling on the virtual device corresponding to the VNF

According to the VNF deployment method in the embodiment shown in FIG. 4A and FIG. 4B or FIG. 5, after VNF deployment is completed, the VNF can run. In a VNF running process, a virtual device used to deploy the VNF may need to be migrated between servers of different types or between servers of a same type. The following describes, by using specific embodiments, a process in which the NFV MANO migrates the virtual device used to deploy the VNF

Case 1: If resources of various types of servers are sufficient, and a type of virtual device is faulty, the resource management layer may automatically re-establish the type of virtual device on a type of server corresponding to the type of virtual device.

Case 2: If a faulty virtual device exists in a virtual device created on a first-type server, resources of the first-type server are insufficient, and resources of another type of server (for example, a second-type server) are sufficient, a virtual device whose quantity is the same as a quantity of faulty virtual devices needs to be re-established on the another type of server (for example, the second-type server), that is, the virtual device used to deploy the VNF is migrated between different types of servers.

In a specific implementation, a process of migrating the virtual device includes the following steps:
(1) The NFV MANO obtains updated quantities of instances in at least two VDUs in a first group of VDUs, where VDUs in the first group of VDUs correspond to a same sub-function. The VDUs in the first group may be VDUs corresponding to a first-type sub-function, and some virtual devices that deploy the first-type sub-function are faulty and need to be migrated.

In a solution, that the NFV MANO obtains updated quantities of instances in at least two VDUs in a first group of VDUs includes: The NFV MANO obtains the updated quantities of instances in the at least two VDUs that are entered by a user.

The user may enter the updated quantities of instances in the at least two VDUs in the first group of VDUs through a user interface corresponding to the NFV MANO.

In another solution, a virtualized network function descriptor VNFD describing the VNF includes a plurality of pieces of indication information, and the indication information is used to indicate VDUs corresponding to a same sub-function. For details, refer to the descriptions of the indication information in Case 4 in the foregoing implementation. The details are not described herein again. In this case, before the NFV MANO obtains the updated quantities of instances in the at least two VDUs in the first group of VDUs, the process further includes: The NFV MANO determines, based on the indication information, each VDU belonging to the first group of VDUs. Correspondingly, that the NFV MANO obtains updated quantities of instances in at least two VDUs in a first group of VDUs includes: The NFV MANO updates a quantity of instances in the at least two VDUs in the first group of VDUs. That is, the NFV MANO automatically updates the quantity of instances in the at least two VDUs in the first group of VDUs without user participation.

(2) For a to-be-scaled-out VDU whose quantity of instances is increased in the at least two VDUs, the NFV MANO controls to add a first quantity of virtual devices corresponding to the to-be-scaled-out VDU, where the first quantity is an increased quantity of instances in the to-be-scaled-out VDU. That the NFV MANO controls to add a first quantity of virtual devices corresponding to the to-be-scaled-out VDU means that the NFV MANO sends a virtual device creation request to a resource management layer, where the virtual device creation request includes the first quantity, a resource requirement included in the to-be-scaled-out VDU, a server label included in the to-be-scaled-out VDU, and a real name that is of an image file and that is included in the to-be-scaled-out VDU; and the resource management layer creates, based on the virtual device creation request, the first quantity of virtual devices corresponding to the to-be-scaled-out VDU.

(3) For a to-be-scaled-in VDU whose quantity of instances is reduced in the at least two VDUs, the NFV MANO controls to reduce virtual devices corresponding to the to-be-scaled-in VDU by a second quantity, where the second quantity is a reduced quantity of instances in the to-be-scaled-in VDU. That the NFV MANO controls to reduce virtual devices corresponding to the to-be-scaled-in VDU by a second quantity means that the NFV MANO sends a virtual device deletion request to a resource management layer, where the virtual device deletion request includes an identifier of a to-be-deleted virtual device; and the resource management layer deletes the virtual device indicated by the identifier.

For example, the first group of VDUs includes a VDU 1 and a VDU 2, a sub-function 1 is deployed on two types of virtual devices that are created respectively based on the VDU 1 and the VDU 2, a type of a server on which five virtual devices created based on the VDU 1 are located is a type 1, and a type of a server on which five virtual devices created based on the VDU 2 are located is a type 2. Two of the five virtual devices created based on the VDU 1 are faulty, the server of the type 1 is insufficient to support re-recreating two virtual devices on the server of the type 1 based on the VDU 1, and the server of the type 2 is sufficient to support re-creating two virtual devices on the server of the type 2 based on the VDU 2. Therefore, an actual quantity of instances in the VDU 1 may be updated to 3, and an actual quantity of instances in the VDU 2 may be updated to 7. The NFV MANO controls the resource management layer to re-create the two virtual devices on the server of the type 2 based on the VDU 2, and the NFV MANO controls the resource management layer to delete the two faulty virtual devices from the five virtual devices created based on the VDU 1.

For example, the first group of VDUs includes a VDU 1 and a VDU 2 (the VDU 2 is not configured and is a VDU template). A type of a server corresponding to the VDU 1 is a type 1, a type of a server corresponding to the VDU 2 is a type 2, a sub-function 1 is deployed on one type of virtual device created based on the VDU 1, and a type of a server on which 10 virtual devices are located is the type 1. Five of the 10 virtual devices are faulty, the server of the type 1 is insufficient to support re-recreating five virtual devices on the server of the type 1 based on the VDU 1, and the server of the type 2 is sufficient to support re-creating five virtual devices on the server of the type 2 based on the VDU 2. Therefore, an actual quantity of instances in the VDU 1 may be updated to 5, and an actual quantity of instances in the VDU 2 may be updated to 5 (that is, the VDU 2 is configured). The NFV MANO controls the resource management layer to re-create the five virtual devices on the server of the type 2 based on the VDU 2, and the NFV MANO controls the resource management layer to delete the five faulty virtual devices from the 10 virtual devices created based on the VDU 1.

Case 3: A virtualized network function descriptor VNFD describing the VNF includes a plurality of pieces of indication information, and the indication information is used to indicate VDUs corresponding to a same sub-function. For details, refer to the descriptions of the indication information in Case 4 in the foregoing implementation. The details are not described herein again.

In this case, the process of migrating the virtual device includes the following steps:
(1) The NFV MANO obtains a migration instruction entered by a user.
   The user may enter the migration instruction through a user interface corresponding to the NFV MANO. For example, the user may enter the migration instruction by tapping a migration indication icon in the user interface.
(2) The NFV MANO obtains a name that is of a to-be-migrated virtual device and that is entered by the user.
   Names of virtual devices corresponding to one VNF may be displayed in the user interface corresponding to the NFV MANO. The user may select a name of a to-be-migrated virtual device in the virtual devices corresponding to the VNF, to enter the name of the to-be-migrated virtual device. That is, there may be one or more to-be-migrated virtual devices.
(3) For any to-be-migrated virtual device, details are as follows:

(31) The NFV MANO determines, based on the name of the to-be-migrated virtual device and first indication information, a target VDU corresponding to a same sub-function as a VDU corresponding to the to-be-migrated virtual device.

If there is one other VDU corresponding to the same sub-function as the VDU corresponding to the to-be-migrated virtual device, the another VDU is the target VDU. If there are a plurality of other VDUs corresponding to the same sub-function as the VDU corresponding to the to-be-migrated virtual device, that the NFV MANO determines a target VDU corresponding to a same sub-function as a VDU corresponding to the to-be-migrated virtual device includes: The NFV MANO determines the other VDUs corresponding to the same sub-function as the VDU corresponding to the to-be-migrated virtual device, and obtains the target VDU from the other VDUs.

The NFV MANO may obtain the target VDU entered by the user. For example, the user may select the target VDU from other VDUs displayed in the user interface corresponding to the NFV MANO.

(33) The NFV MANO node controls, according to the migration instruction and based on the target VDU, the to-be-migrated virtual device to be migrated to a server of a same type as a server corresponding to the target VDU.

To be specific, the NFV MANO node controls, based on the target VDU, to create a new virtual device on the server corresponding to the target VDU, and controls the resource management layer to delete the to-be-migrated virtual device.

This case is applicable to batch migration of virtual devices that deploy the VNF, to improve efficiency of migrating the virtual devices.

This embodiment provides a specific implementation in which the NFV MANO migrates the virtual device used to deploy the VNF

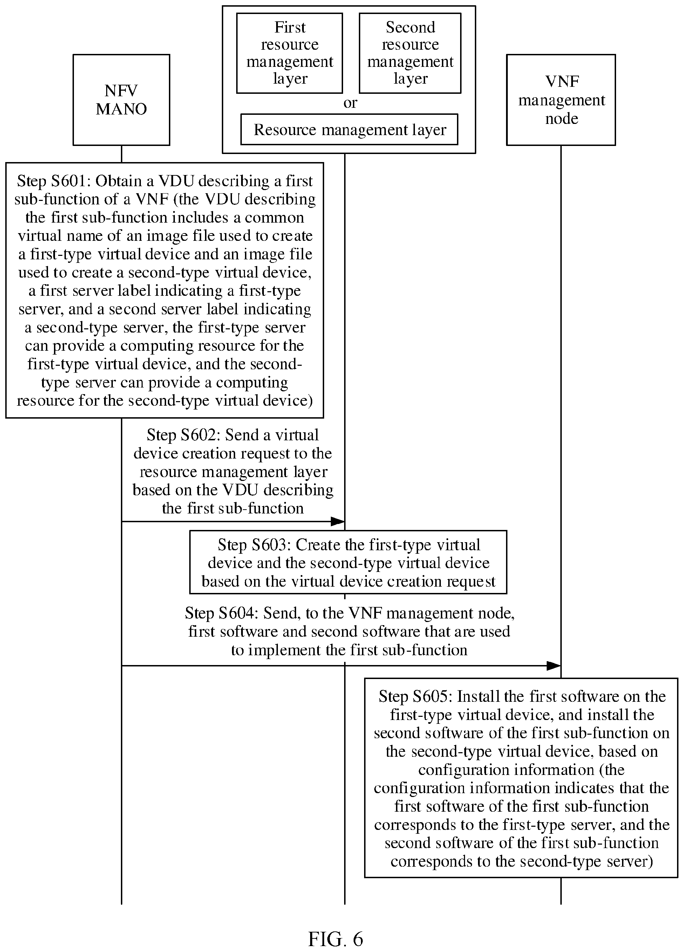

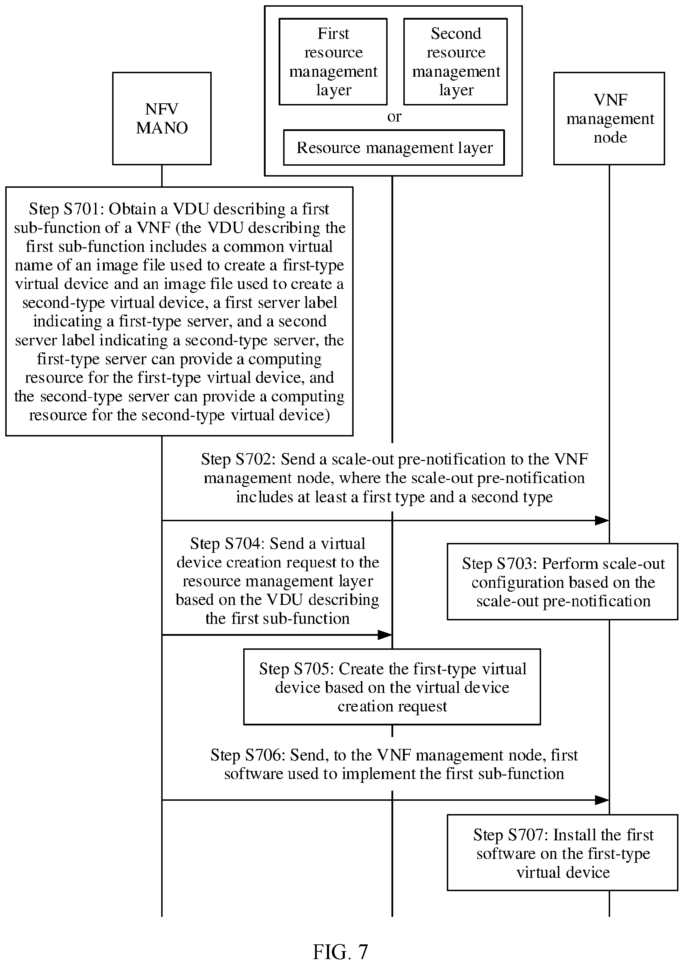

Then, the virtual network function deployment method corresponding to the VNFD in Form 2 is described with reference to embodiments shown in FIG. 6 and FIG. 7.

In a scenario, the first sub-function of the VNF has not been deployed, and a plurality of types of virtual devices need to be created to deploy the first sub-function. Types of servers that provide computing resources for all types of virtual devices are different. The following describes this scenario with reference to the embodiment shown in FIG. 6.

FIG. 6 is an interaction diagram 3 of a virtual network function deployment method according to an embodiment of this application. Refer to FIG. 6. The method in this embodiment includes the following steps.

Step S601: An NFV MANO obtains a VDU describing a first sub-function of a VNF, where the VDU describing the first sub-function includes a common virtual name of an image file used to create a first-type virtual device and an image file used to create a second-type virtual device, a first server label indicating a first-type server, and a second server label indicating a second-type server, the first-type server can provide a computing resource for the first-type virtual device, and the second-type server can provide a computing resource for the second-type virtual device.

This embodiment is applicable to a case in which an NFVI includes the first-type server and the second-type server.

Before the NFV MANO obtains the VDU describing the first sub-function of the VNF, the VNFD describing the VNF is uploaded to the NFV MANO (for example, uploaded to a VNFM in the NFV MANO), that is, the NFV MANO obtains the VNFD describing the VNF. A form of the VNFD describing the VNF is Form 3 described above, that is, each sub-function of the VNF corresponds to one VDU template. After the NFV MANO obtains the VNFD describing the VNF, for the first sub-function of the NFV, the NFV MANO obtains the VDU describing the first sub-function of the VNF

An image file used to create the first-type virtual device and an image file used to create the second-type virtual device are also uploaded to the NFV MANO (for example, uploaded to a VNFM in the NFV MANO), where corresponding image files used to create all first-type virtual devices are the same, and corresponding image files used to create all second-type virtual devices are the same. That is, the NFV MANO obtains the image file used to create the first-type virtual device and the corresponding image file used to create the second-type virtual device. When the virtual device is a VM, details are as follows: (1) The image file used to create the virtual device may be an image file of an operating system of the virtual device. (2) The image file used to create the virtual device is an image file of software used to implement the first sub-function and an operating system of the virtual device. (3) When the virtual device is a container, the image file used to create the virtual device is an image file of the container, and the image file of the container includes software used to implement the first sub-function. It may be understood that an image file used to create a virtual device that deploys another sub-function of the VNF is also uploaded to the NFV MANO. For each sub-function of the VNF, a type of the image file used to create the virtual device that deploys the sub-function is the same as a type of a server included in an NFVI.

In a manner, the NFV MANO sends each image file used to create a virtual device to a resource management layer, where each image file used to create the virtual device is stored in a mirror repository corresponding to the resource management layer.

Optionally, when the virtual device is the VM, first software that is used to implement the first sub-function and that can be installed on the first-type virtual device and second software that is used to implement the first sub-function and that can be installed on the second-type virtual device are also uploaded to the NFV MANO. To be specific, the NFV MANO obtains various types of software used to implement the first sub-function: software that can be installed on the first-type virtual device and software that can be installed on the second-type virtual device. It may be understood that software used to implement another sub-function of the VNF is also uploaded to the NFV MANO. For each sub-function of the VNF, a type of the software used to implement the sub-function is the same as a type of a server included in an NFVI.

The following describes a method in which the NFV MANO obtains the VDU describing the first sub-function of the VNF

A manner in which the NFV MANO obtains the VDU describing the first sub-function of the VNF includes d1 to d5.

d1: The NFV MANO obtains a first server label corresponding to a VDU template corresponding to the first sub-function.

A user may enter the first server label on the VDU template that is displayed in a user interface corresponding to the NFV MANO and that corresponds to the first sub-function, and the NFV MANO obtains the first server label corresponding to the VDU template corresponding to the first sub-function.

d2: The NFV MANO obtains a second server label corresponding to the VDU template corresponding to the first sub-function.

d3: The NFV MANO obtains instance information corresponding to the VDU template corresponding to the first sub-function.

The user may enter the instance information on the VDU template that is displayed in the user interface corresponding to the NFV MANO and that corresponds to the first sub-function, and the NFV MANO obtains the instance information. The instance information includes an actual quantity of instances, and may further include at least one of the following: a maximum quantity of instances and a minimum quantity of instances.

d4: The NFV MANO adds the first server label, the second server label, and the instance information to the VDU template corresponding to the first sub-function, to generate the VDU describing the first sub-function of the VNF

It may be understood that a process in which the NFV MANO obtains the VDU describing the first sub-function of the VNF is a process in which the VDU template corresponding to the first sub-function is configured.

Step S602: The NFV MANO sends a virtual device creation request to a resource management layer based on the VDU describing the first sub-function.

It may be understood that, if the method in this embodiment corresponds to the specific architecture shown in FIG. 2, that the NFV MANO sends a virtual device creation request to a resource management layer based on the VDU describing the first sub-function includes: The NFV MANO sends a first virtual device creation request to a first resource management layer, and sends a second virtual device creation request to a second resource management layer, based on the VDU describing the first sub-function. The first resource management layer is configured to manage the first-type server, and the second resource management layer is configured to manage the second-type server. The first virtual device creation request includes a quantity of to-be-created first-type virtual devices (the quantity of to-be-created first-type virtual devices may be determined by the NFV MANO), a resource requirement in the VDU describing the first sub-function, the first server label, and a virtual name of an image file. The second virtual device creation request includes a quantity of to-be-created second-type virtual devices (the quantity of to-be-created second-type virtual devices may be determined by the NFV MANO), a resource requirement in the VDU describing the first sub-function, the second server label, and a virtual name of an image file. A sum of the quantity of to-be-created first-type virtual devices and the quantity of to-be-created second-type virtual devices is equal to an actual quantity of instances included in the VDU describing the first sub-function.

If the method in this embodiment corresponds to the specific architecture shown in FIG. 3, the NFV MANO sends one virtual device creation request or sends the first virtual device creation request and the second virtual device creation request to a same resource management layer, based on the VDU describing the first sub-function. If the NFV MANO sends one virtual device creation request to the same resource management layer, the virtual device creation request includes the content included in the first virtual device creation request and the second virtual device creation request.

For the resource management layer, when the virtual device is a VM, the resource management layer is an NFVI; or when the virtual device is a container, the resource management layer is a PasS.

Step S603: The resource management layer creates the first-type virtual device and the second-type virtual device based on the virtual device creation request.

The NFVI includes one or more servers whose labels are first server labels. The resource management layer selects a first target server from the servers indicated by the first server labels (it can be learned that a type of the first target server is a first type). There may be one or more first target servers. The resource management layer allocates a resource on the first target server based on the resource requirement included in the virtual device creation request. Then, in a manner, the resource management layer maps, according to a preset mapping rule and based on the type of the first target server, the virtual name included in the virtual device creation request to a first real name, where the preset mapping rule may be a regular rule. For example, if the virtual name is VNF_A_V1R2.iso, and the type of the first target server is ARM, VNF_A_V1R2.iso:ARM is mapped to VNF_A_V1R2_ ARM.iso, where VNF_A_V1R2_ ARM.iso is the first real name. In another manner, the resource management layer obtains a first real name based on a first correspondence and the type of the first target server, where the first correspondence includes at least one virtual name and a first real name and a second real name that correspond to each virtual name, the first real name is a real name of an image file used to create the first-type virtual device, and the second real name is a real name of an image file used to create the second-type virtual device. The resource management layer obtains a first image file whose name is the first real name from the image repository, and installs the obtained first image file on the first target server to create the first-type virtual device.

When the virtual device is a VM, if the first image file obtained by the resource management layer is an image file of an operating system of the first-type virtual device, the resource management layer installs the obtained first image file on the first target server to create the first-type virtual device. If the first image file obtained by the resource management layer is an image file of an operating system of the first-type virtual device and software that is used to implement the first sub-function and that corresponds to the first-type server, after installing the obtained first image file on the first target server, the resource management layer not only creates the first-type virtual device, but also completes installation of the software on the first-type virtual device. When the virtual device is the container, because the image file of the container includes software that is used to implement the first sub-function and that corresponds to the first-type server, after installing the obtained first image file on the first target server, the resource management layer not only creates the first-type virtual device, but also completes installation of the software on the first-type virtual device.

Similarly, the NFVI includes one or more servers whose labels are second server labels. The resource management layer selects a second target server from the servers indicated by the second server labels (it can be learned that a type of the second target server is a second type). There may be one or more second target servers. The resource management layer allocates a resource on the second target server based on the resource requirement included in the virtual device creation request. Then, in a manner, the resource management layer maps, according to a preset mapping rule and based on the type of the second target server, the virtual name included in the virtual device creation request to a second real name, where the preset mapping rule may be a regular rule. For example, if the virtual name is VNF_A_V1R2.iso, and the type of the second target server is X86, VNF_A_V1R2.iso:X86 is mapped to VNF_A_V1R2_ X86.iso, where VNF_A_V1R2_ X86.iso is the second real name. In another manner, the resource management layer obtains a second real name based on a first correspondence and the type of the second target server. The resource management layer obtains a second image file whose name is the second real name from the image repository, and installs the obtained second image file on the second target server to create the second-type virtual device.

When the virtual device is the VM, if the second image file obtained by the resource management layer is an image file of an operating system of the second-type virtual device, the resource management layer installs the obtained second image file on the second target server to create the second-type virtual device. If the second image file obtained by the resource management layer is an image file of an operating system of the second-type virtual device and software that is used to implement the first sub-function and that corresponds to the second-type server, after installing the obtained second image file on the second target server, the resource management layer not only creates the second-type virtual device, but also completes installation of the software on the second-type virtual device. When the virtual device is the container, because the image file of the container includes software that is used to implement the first sub-function and that corresponds to the second-type server, after installing the obtained second image file on the second target server, the resource management layer not only creates the second-type virtual device, but also completes installation of the software on the second-type virtual device.

It may be understood that, if the method in this embodiment corresponds to the specific architecture shown in FIG. 2, the first resource management layer creates the first-type virtual device based on the first virtual device creation request, and the second resource management layer creates the second-type virtual device based on the second virtual device creation request, where the first resource management layer is a management node that corresponds to the virtual device and that manages the first-type server, and the second resource management layer is a management node that corresponds to the virtual device and that manages the second-type server. If the method in this embodiment corresponds to the specific architecture shown in FIG. 3, a same resource management layer creates the first-type virtual device and the second-type virtual device based on one virtual device creation request, or a same resource management layer creates the first-type virtual device based on the first virtual device creation request and creates the second-type virtual device based on the second virtual device creation request.

Step S604: The NFV MANO sends, to a VNF management node, first software and second software that are used to implement the first sub-function.

For this step, refer to descriptions in step S406. Details are not described herein again.

Step S605: The VNF management node installs the first software on the first-type virtual device, and installs the second software of the first sub-function on the second-type virtual device, based on configuration information, where the configuration information indicates that the first software of the first sub-function corresponds to the first-type server, and the second software of the first sub-function corresponds to the second-type server.

For this step, refer to descriptions in step S407. Details are not described herein again.

It may be understood that step S604 and step S605 are optional. Step S604 and step S605 are performed when the virtual device is a VM and the image file corresponding to the virtual device is an image file of an operating system of the virtual device.

The VDU that describes the sub-function and that is obtained in this embodiment includes server labels indicating two types of servers, so that the resource management layer can create virtual devices on the two types of servers. Therefore, a same sub-function can be deployed on the two types of servers. In this way, VNF deployment is flexible, and there is no limitation that the VNF can be deployed on only one type of server.

It may be understood that the embodiment shown in FIG. 6 is merely an example of VNF deployment, and the same sub-function is not limited to being deployed on the two types of servers. For example, the VDU describing the sub-function includes server labels indicating three or four types of servers. To be specific, if there are more than two types (for example, N types, where N is greater than 2) of servers included in the NFVI, VDUs that describe the sub-function may include server labels indicating n (n ≤ N) types of servers, so that the resource management layer can respectively create virtual devices on the N types of servers based on n types of VDUs, where n is an integer greater than or equal to 2. Therefore, a same sub-function can be deployed on a plurality of types of servers, and VNF deployment is flexible.

In another scenario, the first sub-function of the VNF has been deployed on at least a virtual device corresponding to the second-type server. Because a service volume corresponding to the first sub-function of the VNF increases, more virtual devices need to be created to deploy the first sub-function. A to-be-created virtual device includes a virtual device corresponding to the first-type server. The following describes this scenario with reference to the embodiment shown in FIG. 7.

FIG. 7 is an interaction diagram 4 of a virtual network function deployment method according to an embodiment of this application. Refer to FIG. 7. The method in this embodiment includes the following steps.

Step S701: An NFV MANO obtains a VDU describing a first sub-function of a VNF, where the VDU describing the first sub-function includes a common virtual name of an image file used to create a first-type virtual device and an image file used to create a second-type virtual device, a first server label indicating a first-type server, and a second server label indicating a second-type server, the first-type server can provide a computing resource for the first-type virtual device, and the second-type server can provide a computing resource for the second-type virtual device.

This embodiment is applicable to a case in which an NFVI includes the first-type server and the second-type server.

Before the NFV MANO obtains the VDU describing the first sub-function of the VNF, the image file used to create the first-type virtual device is uploaded to the NFV MANO, where corresponding image files used to create all first-type virtual devices are the same. That is, the NFV MANO obtains the image file used to create the first-type virtual device. For each sub-function of the VNF, a type of the image file used to create the virtual device that deploys the sub-function is the same as a type of a server included in an NFVI.

In a manner, the NFV MANO sends the image file used to create the first-type virtual device to a resource management layer, where the image file used to create the first-type virtual device is stored in a mirror repository corresponding to the resource management layer.

Optionally, when the virtual device is a VM, first software that is used to implement the first sub-function and that can be installed on the first-type virtual device is also uploaded to the NFV MANO (for example, uploaded to a VNFM in the NFV MANO). To be specific, the NFV MANO obtains the first software that is used to implement the first sub-function and that can be installed on the first-type virtual device. For each sub-function of the VNF, a type of the software used to implement the sub-function is the same as a type of a server included in an NFVI.

The following describes a method in which the NFV MANO obtains the VDU describing the first sub-function of the VNF

Before the NFV MANO obtains the VDU describing the first sub-function, a VNFD used to describe the VNFM includes an original VDU describing the first sub-function, and the original VDU includes a second server label and original instance information. A manner in which the NFV MANO obtains the VDU describing the first sub-function of the VNF includes e1 to e3.

e1: The NFV MANO obtains a first server label corresponding to a VDU template corresponding to the first sub-function.

e2: The NFV MANO obtains instance information corresponding to the VDU template corresponding to the first sub-function.

e3: The NFV MANO adds the first server label to the original VDU, and replaces the original instance information with the instance information, to obtain the VDU describing the first sub-function of the VNF

Step S702: The NFV MANO sends a scale-out pre-notification to a VNF management node, where the scale-out pre-notification includes at least a first type and a second type.

Step S703: The VNF management node performs scale-out configuration based on the scale-out pre-notification.

For a specific implementation of this step, refer to descriptions in step S503 in the embodiment shown in FIG. 5. Details are not described herein again.

Step S704: The NFV MANO sends a virtual device creation request to a resource management layer based on the VDU describing the first sub-function.

The virtual device creation request includes a difference (that is, a quantity of to-be-created first-type virtual devices) between an actual quantity of instances included in the VDU describing the first sub-function and an original actual quantity of instances in the original instance information, the first server label included in the VDU describing the first sub-function, a virtual name of an image file, and a resource requirement.

For the resource management layer, when the virtual device is a VM, the resource management layer is an NFVI; or when the virtual device is a container, the resource management layer is a PasS.

It may be understood that if the method in this embodiment corresponds to the specific architecture shown in FIG. 2, the NFV MANO sends a virtual device creation request to a first resource management layer based on the VDU describing the first sub-function, where the first resource management layer is configured to manage a first-type server.

Step S705: The resource management layer creates the first-type virtual device based on the virtual device creation request.

For a specific implementation of this step, refer to descriptions in step S603 in the embodiment shown in FIG. 6. Details are not described herein again.

Step S706: The NFV MANO sends, to the VNF management node, first software used to implement the first sub-function.

Step S707: The VNF management node installs the first software on the first-type virtual device.

For specific implementations of step S706 and step S707, refer to descriptions in step S506 and step S507 in the embodiment shown in FIG. 5. Details are not described herein again.

It may be understood that step S706 and step S707 are optional. Step S706 and step S707 are performed when the virtual device is a VM and the image file corresponding to the virtual device is an image file of an operating system of the virtual device.

In this embodiment, one server label indicating that a type of a server is a new type is newly added to the VDU describing the sub-function, so that the resource management layer can create a virtual device on the new type of server to deploy the sub-function. Therefore, a same sub-function can be deployed on two types of servers. In this way, VNF deployment is flexible, and there is no limitation that the VNF can be deployed only on one type of server.

It may be understood that the embodiment shown in FIG. 7 is an example of scaling out the sub-function of the VNF. In a scale-out process, one server label indicating that a type of a server is a new type is not necessarily newly added, for example, two or three server labels may be newly added. To be specific, one type of virtual device is not necessarily newly created on only one type of server, and one type of virtual device may be newly created on each of two types of servers, or one type of virtual device may be newly created on each of three types of servers. If there are more than two types (for example, N types, where N is greater than 2) of servers included in the NFVI, m (m ≤ N - M) server labels indicating that types of servers are new types may be newly added, so that the resource management layer can respectively create new virtual devices on m new types of servers to deploy the sub-function, where m is an integer greater than or equal to 1. Therefore, a same sub-function can be deployed on a plurality of types of servers, and VNF deployment is flexible.

For virtual device migration and scaling processes in the VNF deployment methods in the embodiments shown in FIG. 6 and FIG. 7, refer to a current method for deploying a VNF on one type of server. Details are not described in embodiments of this application.

The foregoing describes the method in this application, and the following describes apparatuses in embodiments of this application.

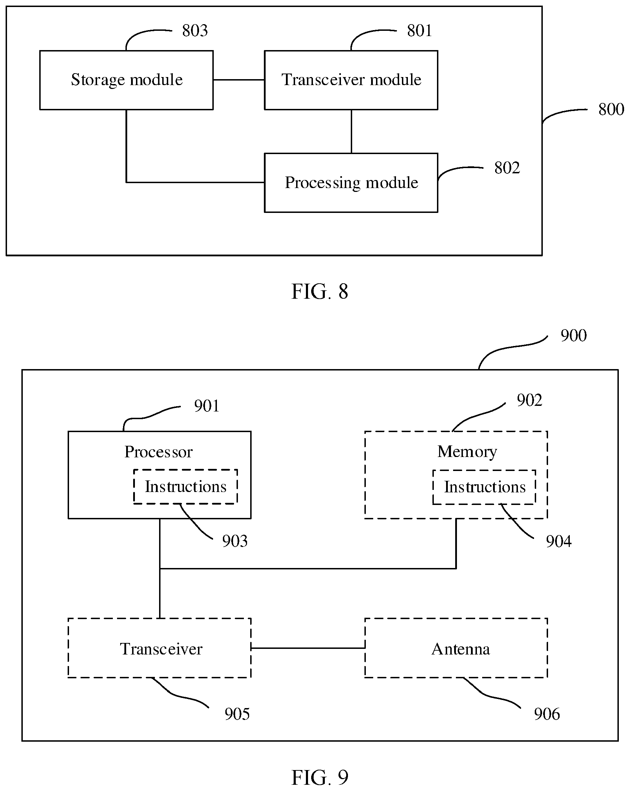

FIG. 8 is a schematic diagram of a structure of a virtual network function deployment apparatus according to an embodiment of this application. As shown in FIG. 8, another embodiment of this application provides a virtual network function deployment apparatus 800. The virtual network function deployment apparatus may be an NFV MANO, or may be a component (for example, an integrated circuit or a chip) in an NFV MANO. The virtual network function deployment apparatus may alternatively be a resource management layer (NFVI or PasS), or may be a component (for example, an integrated circuit or a chip) in a resource management layer. The virtual network function deployment apparatus may alternatively be an NFV management node (NFVI or PasS), or may be a component (for example, an integrated circuit or a chip) in an NFV management node. The virtual network function deployment apparatus may alternatively be another communications module, configured to implement the method in the method embodiment of this application. The virtual network function deployment apparatus 800 may include a processing module (a processing unit) 802. Optionally, the virtual network function deployment apparatus 800 may further include a transceiver module (a transceiver unit) 801 and a storage module (a storage unit) 803.

In a possible design, one or more modules in FIG. 8 may be implemented by one or more processors, may be implemented by one or more processors and memories, may be implemented by one or more processors and transceivers, or may be implemented by one or more processors, memories, and transceivers. This is not limited in embodiments of this application. The processor, the memory, and the transceiver may be disposed separately, or may be integrated.

The virtual network function deployment apparatus has functions of implementing the NFV MANO described in embodiments of this application, for example, the virtual network function deployment apparatus includes modules, units, or means (means) corresponding to the NFV MANO performing the steps related to the NFV MANO described in embodiments of this application. The functions, the units, or the means (means) may be implemented by software or hardware, may be implemented by hardware executing corresponding software, or may be implemented by a combination of software and hardware. For details, refer to the corresponding descriptions in the foregoing corresponding method embodiments.

Alternatively, the virtual network function deployment apparatus has functions of implementing the resource management layer described in embodiments of this application. For example, the virtual network function deployment apparatus includes modules, units, or means (means) corresponding to the resource management layer performing the steps related to the resource management layer described in embodiments of this application. The functions, the units, or the means (means) may be implemented by software or hardware, may be implemented by hardware executing corresponding software, or may be implemented by a combination of software and hardware. For details, refer to the corresponding descriptions in the foregoing corresponding method embodiments.

Alternatively, the virtual network function deployment apparatus has functions of implementing the VNF management node described in embodiments of this application. For example, the virtual network function deployment apparatus includes modules, units, or means (means) corresponding to the VNF management node performing the steps related to the VNF management node described in embodiments of this application. The functions, the units, or the means (means) may be implemented by software or hardware, may be implemented by hardware executing corresponding software, or may be implemented by a combination of software and hardware. For details, refer to the corresponding descriptions in the foregoing corresponding method embodiments.

Optionally, the modules in the virtual network function deployment apparatus 800 in this embodiment of this application may be configured to perform the method described in the method embodiments of this application.

In a first possible design, the virtual network function deployment apparatus 800 may include a transceiver module 801 and a processing module 802.

The processing module 802 is configured to obtain a first virtualization deployment unit VDU in a plurality of VDUs that describe a first sub-function of a virtual network function VNF, where types of servers indicated by server labels included in all of the plurality of VDUs are different, each VDU corresponds to one type of virtual device, and a server label included in each VDU indicates a server that can provide a computing resource for the type of virtual device corresponding to the VDU; and types of central processing units CPUs in different types of servers are different. The transceiver module 801 is configured to send a virtual device creation request to a resource management layer based on the first VDU, where the virtual device creation request is used to indicate the resource management layer to create one type of virtual device corresponding to the first VDU, to deploy the first sub-function.

In a possible implementation, the processing module 802 is specifically configured to: obtain a first server label corresponding to a first VDU template; obtain first instance information corresponding to the first VDU template; and add the first server label and the first instance information to the first VDU template to generate the first VDU.

In a possible implementation, the processing module 802 is further configured to obtain a second VDU in the plurality of VDUs. The transceiver module 801 is specifically configured to send the virtual device creation request to the resource management layer based on the first VDU and the second VDU, where the virtual device creation request is further used to indicate the resource management layer to create one type of virtual device corresponding to the second VDU.

In a possible implementation, a type of a server indicated by a second server label in the second VDU is a second type, and a type of a server indicated by the first server label in the first VDU is a first type. The transceiver module 801 is further configured to send a scale-out pre-notification message to a VNF management node, where the scale-out pre-notification message includes the first type and the second type.

In a possible implementation, after the transceiver module 801 sends the virtual device creation request to the resource management layer based on the first VDU, the processing module 802 is further configured to: determine, based on a KPI, to perform scaling on a virtual device corresponding to the VNF, where the KPI is obtained by collecting statistics about service information of a plurality of types of virtual devices corresponding to the VNF, and the scaling is virtual device scale-out or virtual device scale-in; and perform scaling control on various types of virtual devices that match first scaling information, where the first scaling information includes identifiers of VDUs corresponding to various types of scalable virtual devices that correspond to the KPI, and sub-functions corresponding to VDUs indicated by the first scaling information are different.

In a possible implementation, after the transceiver module 801 sends the virtual device creation request to the resource management layer based on the first VDU, the processing module 802 is further configured to: determine, based on a KPI, to perform scaling on a virtual device corresponding to the VNF, where the KPI is obtained by collecting statistics about service information of a plurality of types of virtual devices corresponding to the VNF, and the scaling is virtual device scale-out or virtual device scale-in. For each type of virtual device that matches second scaling information, the transceiver module 801 is further configured to send a pre-scaling request to the VNF management node, where the pre-scaling request includes an identifier of a VDU corresponding to the type of virtual device, the second scaling information includes identifiers of VDUs corresponding to various types of scalable virtual devices that correspond to the KPI, and VDUs corresponding to a same sub-function exist in VDUs indicated by the second scaling information. The transceiver module 801 is further configured to receive a first-type notification message or a second-type notification message from the VNF management node, where the first-type notification message indicates the NFV MANO to perform scaling control on one type of virtual device corresponding to the VDU indicated by the identifier that is of the VDU and that is included in the pre-scaling request, and the second-type notification message indicates the NFV MANO not to perform scaling control on one type of virtual device corresponding to the VDU indicated by the identifier that is of the VDU and that is included in the pre-scaling request.

In a possible implementation, a virtualized network function descriptor VNFD describing the VNF includes a plurality of pieces of indication information, and the indication information is used to indicate VDUs corresponding to a same sub-function. After the transceiver module 801 sends the virtual device creation request to the resource management layer based on the first VDU, the processing module 802 is further configured to: determine, based on a KPI, to perform scaling on a virtual device corresponding to the VNF, where the KPI is obtained by collecting statistics about service information of a plurality of types of virtual devices corresponding to the VNF, and the scaling is virtual device scale-out or virtual device scale-in; and determine, based on the indication information, to perform scaling control on various types of virtual devices that match second scaling information, where the second scaling information includes identifiers of VDUs corresponding to various types of scalable virtual devices that correspond to the KPI, and VDUs corresponding to a same sub-function exist in VDUs indicated by the second scaling information.

In a possible implementation, after the transceiver module 801 sends the virtual device creation request to the resource management layer based on the first VDU, the processing module 802 is further configured to: obtain updated quantities of instances in at least two VDUs in a first group of VDUs, where VDUs in the first group of VDUs correspond to a same sub-function; for a to-be-scaled-out VDU whose quantity of instances is increased in the at least two VDUs, control to add a first quantity of virtual devices corresponding to the to-be-scaled-out VDU, where the first quantity is an increased quantity of instances in the to-be-scaled-out VDU; and for a to-be-scaled-in VDU whose quantity of instances is reduced in the at least two VDUs, control to reduce virtual devices corresponding to the to-be-scaled-in VDU by a second quantity, where the second quantity is a reduced quantity of instances in the to-be-scaled-in VDU.

In a possible implementation, the processing module 802 is specifically configured to obtain the updated quantities of instances in the at least two VDUs that are entered by a user.

In a possible implementation, a virtualized network function descriptor VNFD describing the VNF includes a plurality of pieces of indication information, and the indication information is used to indicate VDUs corresponding to a same sub-function. Before the processing module 802 obtains the updated quantities of instances in the at least two VDUs in the first group of VDUs, the processing module 802 is further configured to determine, based on the indication information, each VDU belonging to the first group of VDUs. Correspondingly, the processing module 802 is specifically configured to update a quantity of instances in the at least two VDUs in the first group of VDUs.

In a possible implementation, after the transceiver module 801 sends the virtual device creation request to the resource management layer based on the first VDU, the processing module 802 is further configured to: obtain a migration instruction entered by the user; obtain a name that is of a to-be-migrated virtual device and that is entered by the user; determine, based on the name of the to-be-migrated virtual device and first indication information, a target VDU corresponding to a same sub-function as a VDU corresponding to the to-be-migrated virtual device, where the first indication information indicates another VDU corresponding to a same sub-function as the VDU corresponding to the to-be-migrated virtual device; and control, according to the migration instruction and based on the target VDU, the to-be-migrated virtual device to be migrated to a server of a same type as a server corresponding to the target VDU.

The virtual network function deployment apparatus in the first possible design may be the NFV MANO.

In a second possible design, the virtual network function deployment apparatus 800 may include a transceiver module 801 and a processing module 802. A network function virtualization infrastructure NFVI layer includes a first-type server and a second-type server, and types of central processing units CPUs in the first-type server and the second-type server are different.

The processing module 802 is configured to obtain a VDU describing a first sub-function of a VNF, where the VDU describing the first sub-function includes a common virtual name of an image file used to create a first-type virtual device and an image file used to create a second-type virtual device, a first server label indicating the first-type server, and a second server label indicating the second-type server, the first-type server can provide a computing resource for the first-type virtual device, and the first-type server can provide a computing resource for the second-type virtual device. The transceiver module 801 is configured to send a virtual device creation request to a resource management layer based on the VDU describing the first sub-function, where the virtual device creation request is used to indicate the resource management layer to create the first-type virtual device and/or the second-type virtual device, to deploy the first sub-function.

In a possible implementation, before the processing module 802 obtains the VDU describing the first sub-function, a VNFD used to describe the NFV MANO includes an original VDU describing the first sub-function, and the original VDU includes the second server label and first instance information. The processing module 802 is specifically configured to: obtain the second server label corresponding to the original VDU; obtain second instance information corresponding to the original VDU; and add the second server label to the original VDU, and replace the first instance information with the second instance information, to obtain the VDU describing the first sub-function of the VNF

The virtual network function deployment apparatus in the second possible design may be the NFV MANO.

In a third possible design, the virtual network function deployment apparatus 800 may include a transceiver module 801 and a processing module 802. A network function virtualization infrastructure NFVI layer includes a plurality of types of servers, and types of central processing units CPUs in different types of servers are different.

The transceiver module 801 is configured to receive a virtual device creation request from a network function virtualization manager NFV MANO, where the virtual device creation request includes a server label and a virtual name of an image file of a to-be-created virtual device. The processing module 802 is configured to: determine a target server from a server indicated by the server label; map the virtual name and a type of the target server to a real name of the image file of the to-be-created virtual device according to a preset mapping rule; obtain the image file of the to-be-created virtual device based on the real name; and create the virtual device based on the virtual device creation request and the image file of the to-be-created virtual device.

The virtual network function deployment apparatus in the third possible design may be a resource management layer.

In a fourth possible design, the virtual network function deployment apparatus 800 may include a transceiver module 801 and a processing module 802. A first sub-function of a virtual network function VNF corresponds to a first-type virtual device and a second-type virtual device, a server that provides a computing resource for the first-type virtual device is a first-type server, a server that provides a computing resource for the second-type virtual device is a second-type server, and types of central processing units CPUs in the first-type server and the second-type server are different.

The processing module 802 is configured to obtain configuration information, where the configuration information indicates that first-type software of the first sub-function corresponds to the first-type server, and second-type software of the first sub-function corresponds to the second-type server. The processing module 802 is further configured to: install the first-type software of the first sub-function on the first-type virtual device, and install the second-type software of the first sub-function on the second-type virtual device, based on the configuration information.

In a possible implementation, the transceiver module 801 is configured to receive a scale-out pre-notification message from a network function virtualization manager NFV MANO, where the scale-out pre-notification message includes a first type and a second type. The processing module 802 is further configured to perform scale-out configuration based on the scale-out pre-notification message.

In a possible implementation, the transceiver module 801 is configured to: receive a pre-scaling request from a network function virtualization manager NFV MANO, where the pre-scaling request includes an identifier of a VDU corresponding to a to-be-scaled virtual device; and if no notification message indicating that the NFV MANO is allowed to perform scaling on another type of virtual device corresponding to a same sub-function as the to-be-scaled virtual device is sent to the NFV MANO in a current scaling period, send a first-type notification message to the NFV MANO, where the first-type notification message indicates the NFV MANO to perform scaling control on one type of virtual device corresponding to the VDU indicated by the identifier that is of the VDU and that is included in the pre-scaling request, and the scaling is virtual device scale-out or virtual device scale-in; or if a notification message indicating that the NFV MANO is allowed to perform scaling on another type of virtual device corresponding to a same sub-function as the to-be-scaled virtual device is sent to the NFV MANO in a current scaling period, send a second-type notification message to the NFV MANO, where the second-type notification message indicates the NFV MANO not to perform scaling control on one type of virtual device corresponding to the VDU indicated by the identifier that is of the VDU and that is included in the pre-scaling request.

The virtual network function deployment apparatus in the fourth possible design may be an NFV management node.

FIG. 9 is a schematic block diagram of an implementation of a network function virtualization device according to an embodiment of this application. The network function virtualization device in this embodiment may be an NFV MANO, a resource management layer, or a VNF management node, may be a chip, a chip system, a processor, or the like that supports the NFV MANO, the resource management layer, or the VNF management in implementing the foregoing method, or may be a chip, a chip system, a processor, or the like that supports implementation of the foregoing method. The network function virtualization device may be configured to implement the method corresponding to the terminal device or the server described in the foregoing method embodiments. For details, refer to descriptions in the foregoing method embodiments. The server may be a local server or a cloud server.

The network function virtualization device may include one or more processors 901. The processor 901 may also be referred to as a processing unit, and may implement a specific control function. The processor 901 may be a general-purpose processor, a dedicated processor, or the like.

In an optional design, the processor 901 may also store instructions and/or data 903, and the instructions and/or data 903 may be run on the processor, so that the network function virtualization device performs the method described in the foregoing method embodiments.

In another optional design, the processor 901 may include a transceiver unit configured to implement receiving and sending functions. For example, the transceiver unit may be a transceiver circuit, an interface, or an interface circuit. The transceiver circuit, the interface, or the interface circuit configured to implement the receiving and sending functions may be separated, or may be integrated together. The transceiver circuit, the interface, or the interface circuit may be configured to: read and write code/data. Alternatively, the transceiver circuit, the interface, or the interface circuit may be configured to: transmit or transfer a signal.

Optionally, the network function virtualization device may include one or more memories 902, and the memory 902 may store instructions 904. The instructions may be run on the processor, so that the network function virtualization device performs the method described in the foregoing method embodiments. Optionally, the memory may further store data. Optionally, the processor may also store instructions and/or data. The processor and the memory may be separately disposed, or may be integrated together. For example, the correspondence described in the foregoing method embodiments may be stored in the memory or stored in the processor.

Optionally, the network function virtualization device may further include a transceiver 905 and/or an antenna 906. The processor 901 may be referred to as a processing unit, and controls the network function virtualization device. The transceiver 905 may be referred to as a transceiver unit, a transceiver machine, a transceiver circuit, a transceiver, or the like, and is configured to implement transceiver functions.

The processor and the transceiver described in this embodiment may be manufactured by using various IC process technologies, such as a complementary metal oxide semiconductor (complementary metal oxide semiconductor, CMOS), an N-channel metal oxide semiconductor (N-channel metal oxide semiconductor, NMOS), a p-channel metal oxide semiconductor (p-channel metal oxide semiconductor, PMOS), a bipolar junction transistor (Bipolar Junction Transistor, BJT), a bipolar CMOS (BiCMOS), silicon germanium (SiGe), and gallium arsenide (GaAs).

It should be understood that the processor in this embodiment of this application may be an integrated circuit chip, and has a signal processing capability. In an implementation process, the steps in the foregoing method embodiments may be completed by using a hardware integrated logic circuit in the processor or instructions in a form of software. The foregoing processor may be a general-purpose processor, a digital signal processor (digital signal processor, DSP), an application-specific integrated circuit (application-specific integrated circuit, ASIC), a field programmable gate array (field programmable gate array, FPGA) or another programmable logic device, a discrete gate or transistor logic device, or a discrete hardware component.

It may be understood that, in this embodiment of this application, the memory may be a volatile memory or a nonvolatile memory, or may include both a volatile memory and a nonvolatile memory. The nonvolatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM), and is used as an external cache. By way of example but not limitative descriptions, many forms of RAMs are available, for example, a static random access memory (static RAM, SRAM), a dynamic random access memory (dynamic RAM, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchlink dynamic random access memory (synchlink DRAM, SLDRAM), and a direct rambus random access memory (direct rambus RAM, DR RAM). It should be noted that, the memory in the system and method described in this specification includes but is not limited to these memories and any memory of another proper type.

A scope of the network function virtualization device described in this embodiment of this application is not limited thereto, and a structure of the network function virtualization device may not be limited in FIG. 9. The network function virtualization device described in this embodiment of this application may be an independent device or may be a part of a larger device.

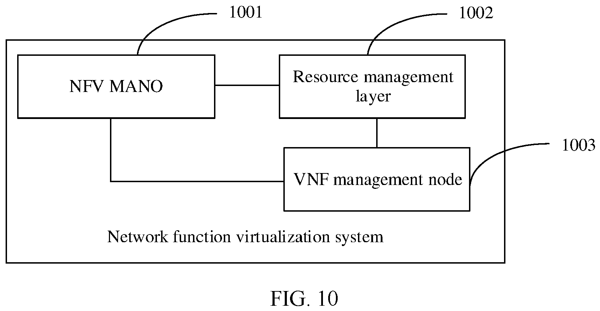

FIG. 10 is a schematic block diagram of an implementation of a network function virtualization system according to an embodiment of this application. Refer to FIG. 10. The network function virtualization system in this embodiment includes a network function virtualization manager NFV MANO 1001, a resource management layer 1002, and a virtual network function VNF management node 1003.

The NFV MANO 1001 is configured to perform the method corresponding to the NFV MANO in the foregoing method embodiment. The resource management layer 1002 is configured to perform the method corresponding to the resource management layer in the foregoing method embodiment. The VNF management node 1003 is configured to perform the method corresponding to the VNF management node in the foregoing method embodiment.

An embodiment of this application provides a non-transitory computer-readable storage medium that stores computer instructions. The computer instructions are used to enable a computer to perform the method corresponding to the resource management layer in the foregoing method embodiment, the method corresponding to the NFV MANO in the foregoing method embodiment, or the method corresponding to the VNF management node in the foregoing method embodiment.

When software is used to implement the foregoing embodiments, the foregoing embodiments may be implemented completely or partially in a form of a computer program product. The computer program product includes one or more computer instructions. When the computer instructions are loaded and executed on a computer, the procedures or functions according to embodiments of this application are all or partially generated. The computer may be a general-purpose computer, a dedicated computer, a computer network, or another programmable apparatus. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (digital subscriber line, DSL)) or wireless (for example, infrared, radio, or microwave) manner. The computer-readable storage medium may be any usable medium accessible by a computer, or a data storage device, such as a server or a data center, integrating one or more usable media. The usable medium may be a magnetic medium (for example, a floppy disk, a hard disk, or a magnetic tape), an optical medium (for example, a high-density digital video disc (digital video disc, DVD)), a semiconductor medium (for example, a solid-state drive (solid-state drive, SSD)), or the like.

In the several embodiments provided in this application, it should be understood that the disclosed system, apparatus, and method may be implemented in another manner. For example, the described apparatus embodiments are merely examples. For example, division into the units is merely logical function division and may be other division in an actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electronic, mechanical, or another form.

The units described as separate parts may or may not be physically separate, and parts displayed as units may or may not be physical units, and may be located at one location, or may be distributed on a plurality of network units. Some or all of the units may be selected based on actual requirements to achieve the objectives of the solutions in the embodiments.

In addition, functional units in embodiments of this application may be integrated into one processing unit, each of the units may exist alone physically, or two or more units are integrated into one unit.

When the functions are implemented in a form of a software functional unit and sold or used as an independent product, the functions may be stored in a computer-readable storage medium. Based on such an understanding, the technical solutions of this application essentially, or the part contributing to the conventional technology, or some of the technical solutions may be implemented in a form of a software product. The computer software product is stored in a storage medium, and includes several instructions for indicating a computer device (which may be a personal computer, a server, or a network device) to perform all or some of the steps of the method described in embodiments of this application.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

It should be understood that, an "embodiment" mentioned throughout this specification means that particular features, structures, or characteristics related to this embodiment are included in at least one embodiment of this application. Therefore, embodiments in the entire specification do not necessarily refer to a same embodiment. In addition, these particular features, structures, or characteristics may be combined in one or more embodiments in any proper manner. It should be understood that sequence numbers of the foregoing processes do not mean execution sequences in various embodiments of this application. The execution sequences of the processes should be determined based on functions and internal logic of the processes, and should not be construed as any limitation on the implementation processes of embodiments of this application.

It should be further understood that, in this application, both "when" and "if' mean that the terminal device or the server performs corresponding processing in an objective situation, are not intended to limit time, do not require that the terminal device or the server needs to perform a determining action during implementation, and do not mean that there is another limitation.

In this application, unless otherwise specified, an element represented in a singular form is intended to represent "one or more", but is not intended to represent "one and only one". In this application, unless otherwise specified, "at least one" is intended to represent "one or more", and "a plurality of' is intended to represent "two or more".

In addition, the term "and/or" in this specification describes only an association relationship for describing associated objects and represents that three relationships may exist. For example, A and/or B may represent the following three cases: Only A exists, both A and B exist, and only B exists. A may be singular or plural, and B may be singular or plural.

The character "/" usually represents an "or" relationship between the associated objects.

The term "at least one of' in this specification indicates all or any combination of listed items. For example, "at least one of A, B, and C" may indicate the following six cases: Only A exists, only B exists, only C exists, both A and B exist, both B and C exist, and A, B, and C exist. A may be singular or plural, B may be singular or plural, and C may be singular or plural.

It should be understood that in embodiments of this application, "B corresponding to A" indicates that B is associated with A, and B may be determined based on A. However, it should be further understood that determining B based on A does not mean that B is determined based on only A. B may alternatively be determined based on A and/or other information.

## Claims

1. A virtual network function deployment method, comprising:
obtaining, by a network function virtualization management and orchestration NFV MANO system, a first virtualization deployment unit VDU in a plurality of VDUs that describe a first sub-function of a virtual network function VNF, wherein types of servers indicated by server labels comprised in all of the plurality of VDUs are different, each VDU corresponds to one type of virtual device, and a server label comprised in each VDU indicates a server that can provide a computing resource for the type of virtual device corresponding to the VDU; and types of central processing units CPUs in different types of servers are different; and
sending, by the NFV MANO, a virtual device creation request to a resource management layer based on the first VDU, wherein the virtual device creation request is used to indicate the resource management layer to create one type of virtual device corresponding to the first VDU, to deploy the first sub-function.

2. The method according to claim 1, wherein the obtaining a first VDU in a plurality of VDUs comprises:
obtaining, by the NFV MANO, a first server label corresponding to a first VDU template;
obtaining, by the NFV MANO, first instance information corresponding to the first VDU template; and
adding, by the NFV MANO, the first server label and the first instance information to the first VDU template to generate the first VDU.

3. The method according to claim 1 or 2, further comprising:
obtaining, by the NFV MANO, a second VDU in the plurality of VDUs; and
the sending, by the NFV MANO, a virtual device creation request to a resource management layer based on the first VDU comprises:
sending, by the NFV MANO, the virtual device creation request to the resource management layer based on the first VDU and the second VDU, wherein the virtual device creation request is further used to indicate the resource management layer to create one type of virtual device corresponding to the second VDU.

4. The method according to claim 3, wherein a type of a server indicated by a second server label in the second VDU is a second type, and a type of a server indicated by the first server label in the first VDU is a first type; and the method further comprises:
sending, by the NFV MANO, a scale-out pre-notification message to a VNF management node, wherein the scale-out pre-notification message comprises the first type and the second type.

5. The method according to any one of claims 1 to 4, wherein after the sending, by the NFV MANO, a virtual device creation request to a resource management layer based on the first VDU, the method further comprises:
determining, by the NFV MANO based on a KPI, to perform scaling on a virtual device corresponding to the VNF, wherein the KPI is obtained by collecting statistics about service information of a plurality of types of virtual devices corresponding to the VNF, and the scaling is virtual device scale-out or virtual device scale-in; and
performing, by the NFV MANO, scaling control on various types of virtual devices that match first scaling information, wherein the first scaling information comprises identifiers of VDUs corresponding to various types of scalable virtual devices that correspond to the KPI, and sub-functions corresponding to VDUs indicated by the first scaling information are different.

6. The method according to any one of claims 1 to 4, wherein after the sending, by the NFV MANO, a virtual device creation request to a resource management layer based on the first VDU, the method further comprises:
determining, by the NFV MANO based on a KPI, to perform scaling on a virtual device corresponding to the VNF, wherein the KPI is obtained by collecting statistics about service information of a plurality of types of virtual devices corresponding to the VNF, and the scaling is virtual device scale-out or virtual device scale-in;
for each type of virtual device that matches second scaling information, sending, by the NFV MANO, a pre-scaling request to the VNF management node, wherein the pre-scaling request comprises an identifier of a VDU corresponding to the type of virtual device, the second scaling information comprises identifiers of VDUs corresponding to various types of scalable virtual devices that correspond to the KPI, and VDUs corresponding to a same sub-function exist in VDUs indicated by the second scaling information; and
receiving, by the NFV MANO, a first-type notification message or a second-type notification message from the VNF management node, wherein the first-type notification message indicates the NFV MANO to perform scaling control on one type of virtual device corresponding to the VDU indicated by the identifier that is of the VDU and that is comprised in the pre-scaling request, and the second-type notification message indicates the NFV MANO not to perform scaling control on one type of virtual device corresponding to the VDU indicated by the identifier that is of the VDU and that is comprised in the pre-scaling request.

7. The method according to any one of claims 1 to 4, wherein a virtualized network function descriptor VNFD describing the VNF comprises a plurality of pieces of indication information, and the indication information is used to indicate VDUs corresponding to a same sub-function; and after the sending, by the NFV MANO, a virtual device creation request to a resource management layer based on the first VDU, the method further comprises:
determining, by the NFV MANO based on a KPI, to perform scaling on a virtual device corresponding to the VNF, wherein the KPI is obtained by collecting statistics about service information of a plurality of types of virtual devices corresponding to the VNF, and the scaling is virtual device scale-out or virtual device scale-in; and determining, by the NFV MANO based on the indication information, to perform scaling control on various types of virtual devices that match second scaling information, wherein the second scaling information comprises identifiers of VDUs corresponding to various types of scalable virtual devices that correspond to the KPI, and VDUs corresponding to a same sub-function exist in VDUs indicated by the second scaling information.

8. The method according to any one of claims 1 to 4, wherein after the sending, by the NFV MANO, a virtual device creation request to a resource management layer based on the first VDU, the method further comprises:
obtaining, by the NFV MANO, updated quantities of instances in at least two VDUs in a first group of VDUs, wherein VDUs in the first group of VDUs correspond to a same sub-function;
for a to-be-scaled-out VDU whose quantity of instances is increased in the at least two VDUs, controlling, by the NFV MANO, to add a first quantity of virtual devices corresponding to the to-be-scaled-out VDU, wherein the first quantity is an increased quantity of instances in the to-be-scaled-out VDU; and
for a to-be-scaled-in VDU whose quantity of instances is reduced in the at least two VDUs, controlling, by the NFV MANO, to reduce virtual devices corresponding to the to-be-scaled-in VDU by a second quantity, wherein the second quantity is a reduced quantity of instances in the to-be-scaled-in VDU.

9. The method according to claim 8, wherein the obtaining, by the NFV MANO, updated quantities of instances in at least two VDUs in a first group of VDUs comprises:
obtaining, by the NFV MANO, the updated quantities of instances in the at least two VDUs that are entered by a user.

10. The method according to claim 8, wherein a virtualized network function descriptor VNFD describing the VNF comprises a plurality of pieces of indication information, and the indication information is used to indicate VDUs corresponding to a same sub-function;
before the obtaining, by the NFV MANO, updated quantities of instances in at least two VDUs in a first group of VDUs, the method further comprises:
determining, by the NFV MANO based on the indication information, each VDU belonging to the first group of VDUs; and
the obtaining, by the NFV MANO, updated quantities of instances in at least two VDUs in a first group of VDUs comprises:
updating, by the NFV MANO, quantities of instances in the at least two VDUs in the first group of VDUs.

11. The method according to any one of claims 1 to 7, wherein after the sending, by the NFV MANO, a virtual device creation request to a resource management layer based on the first VDU, the method further comprises:
obtaining, by the NFV MANO, a migration instruction entered by a user; obtaining, by the NFV MANO, a name that is of a to-be-migrated virtual device and that is entered by the user;
determining, by the NFV MANO based on the name of the to-be-migrated virtual device and first indication information, a target VDU corresponding to a same sub-function as a VDU corresponding to the to-be-migrated virtual device, wherein the first indication information indicates another VDU corresponding to a same sub-function as the VDU corresponding to the to-be-migrated virtual device; and
controlling, by the NFV MANO node according to the migration instruction and based on the target VDU, the to-be-migrated virtual device to be migrated to a server of a same type as a server corresponding to the target VDU.

12. A virtual network function deployment method, wherein a network function virtualization infrastructure NFVI layer comprises a first-type server and a second-type server, and types of central processing units CPUs in the first-type server and the second-type server are different; and the method comprises:
obtaining, by a network function virtualization management and orchestration NFV MANO system, a VDU describing a first sub-function of a virtual network function VNF, wherein the VDU describing the first sub-function comprises a common virtual name of an image file used to create a first-type virtual device and an image file used to create a second-type virtual device, a first server label indicating the first-type server, and a second server label indicating the second-type server, the first-type server can provide a computing resource for the first-type virtual device, and the first-type server can provide a computing resource for the second-type virtual device; and
sending, by the NFV MANO, a virtual device creation request to a resource management layer based on the VDU describing the first sub-function, wherein the virtual device creation request is used to indicate the resource management layer to create the first-type virtual device and/or the second-type virtual device, to deploy the first sub-function.

13. The method according to claim 12, wherein before the obtaining, by an NFV MANO, a VDU describing a first sub-function, a VNFD used to describe the NFV MANO comprises an original VDU describing the first sub-function, and the original VDU comprises the second server label and first instance information; and
the obtaining, by an NFV MANO, a VDU describing a first sub-function of a VNF comprises:
obtaining, by the NFV MANO, the second server label corresponding to the original VDU;
obtaining, by the NFV MANO, second instance information corresponding to the original VDU; and
adding, by the NFV MANO, the second server label to the original VDU, and replacing the first instance information with the second instance information, to obtain the VDU describing the first sub-function of the VNF

14. A virtual network function deployment method, wherein a network function virtualization infrastructure NFVI layer comprises a plurality of types of servers, and types of central processing units CPUs in different types of servers are different; and the method comprises:
receiving, by a resource management layer, a virtual device creation request from a network function virtualization manager NFV MANO, wherein the virtual device creation request comprises a server label and a virtual name of an image file of a to-be-created virtual device;
determining, by the resource management layer, a target server from a server indicated by the server label;
mapping, by the resource management layer, the virtual name and a type of the target server to a real name of the image file of the to-be-created virtual device according to a preset mapping rule;
obtaining, by the resource management layer, the image file of the to-be-created virtual device based on the real name; and
creating, by the resource management layer, the virtual device based on the virtual device creation request and the image file of the to-be-created virtual device.

15. A virtual network function deployment method, wherein a first sub-function of a virtual network function VNF corresponds to a first-type virtual device and a second-type virtual device, a server that provides a computing resource for the first-type virtual device is a first-type server, a server that provides a computing resource for the second-type virtual device is a second-type server, and types of central processing units CPUs in the first-type server and the second-type server are different; and the method comprises:
obtaining, by a VNF management node, configuration information, wherein the configuration information indicates that first-type software of the first sub-function corresponds to the first-type server, and second-type software of the first sub-function corresponds to the second-type server; and
installing, by the VNF management node, the first-type software of the first sub-function on the first-type virtual device, and installing the second-type software of the first sub-function on the second-type virtual device, based on the configuration information.

16. The method according to claim 15, further comprising:
receiving, by the VNF management node, a scale-out pre-notification message from a network function virtualization manager NFV MANO, wherein the scale-out pre-notification message comprises a first type and a second type; and
performing, by the VNF management node, scale-out configuration based on the scale-out pre-notification message.

17. The method according to claim 15 or 16, further comprising:
receiving, by the VNF management node, a pre-scaling request from a network function virtualization manager NFV MANO, wherein the pre-scaling request comprises an identifier of a VDU corresponding to a to-be-scaled virtual device; and
if no notification message indicating that the NFV MANO is allowed to perform scaling on another type of virtual device corresponding to a same sub-function as the to-be-scaled virtual device is sent to the NFV MANO in a current scaling period, sending, by the VNF management node, a first-type notification message to the NFV MANO, wherein the first-type notification message indicates the NFV MANO to perform scaling control on one type of virtual device corresponding to the VDU indicated by the identifier that is of the VDU and that is comprised in the pre-scaling request, and the scaling is virtual device scale-out or virtual device scale-in; or
if a notification message indicating that the NFV MANO is allowed to perform scaling on another type of virtual device corresponding to a same sub-function as the to-be-scaled virtual device is sent to the NFV MANO in a current scaling period, sending, by the VNF management node, a second-type notification message to the NFV MANO, wherein the second-type notification message indicates the NFV MANO not to perform scaling control on one type of virtual device corresponding to the VDU indicated by the identifier that is of the VDU and that is comprised in the pre-scaling request.

18. A virtual network function deployment apparatus, comprising:
a processing module, configured to obtain a first virtualization deployment unit VDU in a plurality of VDUs that describe a first sub-function of a virtual network function VNF, wherein types of servers indicated by server labels comprised in all of the plurality of VDUs are different, each VDU corresponds to one type of virtual device, and a server label comprised in each VDU indicates a server that can provide a computing resource for the type of virtual device corresponding to the VDU; and types of central processing units CPUs in different types of servers are different; and
a transceiver module, configured to send a virtual device creation request to a resource management layer based on the first VDU, wherein the virtual device creation request is used to indicate the resource management layer to create one type of virtual device corresponding to the first VDU, to deploy the first sub-function.

19. The apparatus according to claim 18, wherein the processing module is further configured to obtain a second VDU in the plurality of VDUs; and
the transceiver module is specifically configured to send the virtual device creation request to the resource management layer based on the first VDU and the second VDU, wherein the virtual device creation request is further used to indicate the resource management layer to create one type of virtual device corresponding to the second VDU.

20. The apparatus according to claim 19, wherein a type of a server indicated by a second server label in the second VDU is a second type, and a type of a server indicated by a first server label in the first VDU is a first type; and
the transceiver module is further configured to send a scale-out pre-notification message to a VNF management node, wherein the scale-out pre-notification message comprises the first type and the second type.

21. The apparatus according to any one of claims 18 to 20, wherein after the transceiver module sends the virtual device creation request to the resource management layer based on the first VDU, the processing module is further configured to:
determine, based on a KPI, to perform scaling on a virtual device corresponding to the VNF, wherein the KPI is obtained by collecting statistics about service information of a plurality of types of virtual devices corresponding to the VNF, and the scaling is virtual device scale-out or virtual device scale-in; and
perform scaling control on various types of virtual devices that match first scaling information, wherein the first scaling information comprises identifiers of VDUs corresponding to various types of scalable virtual devices that correspond to the KPI, and sub-functions corresponding to VDUs indicated by the first scaling information are different.

22. The apparatus according to any one of claims 18 to 20, wherein after the transceiver module sends the virtual device creation request to the resource management layer based on the first VDU,
the processing module is further configured to determine, based on a KPI, to perform scaling on a virtual device corresponding to the VNF, wherein the KPI is obtained by collecting statistics about service information of a plurality of types of virtual devices corresponding to the VNF, and the scaling is virtual device scale-out or virtual device scale-in;
for each type of virtual device that matches second scaling information, the transceiver module is further configured to send a pre-scaling request to the VNF management node, wherein the pre-scaling request comprises an identifier of a VDU corresponding to the type of virtual device, the second scaling information comprises identifiers of VDUs corresponding to various types of scalable virtual devices that correspond to the KPI, and VDUs corresponding to a same sub-function exist in VDUs indicated by the second scaling information; and
the transceiver module is further configured to receive a first-type notification message or a second-type notification message from the VNF management node, wherein the first-type notification message indicates the NFV MANO to perform scaling control on one type of virtual device corresponding to the VDU indicated by the identifier that is of the VDU and that is comprised in the pre-scaling request, and the second-type notification message indicates the NFV MANO not to perform scaling control on one type of virtual device corresponding to the VDU indicated by the identifier that is of the VDU and that is comprised in the pre-scaling request.

23. The apparatus according to any one of claims 18 to 20, wherein a virtualized network function descriptor VNFD describing the VNF comprises a plurality of pieces of indication information, and the indication information is used to indicate VDUs corresponding to a same sub-function; and after the transceiver module sends the virtual device creation request to the resource management layer based on the first VDU, the processing module is further configured to:
determine, based on a KPI, to perform scaling on a virtual device corresponding to the VNF, wherein the KPI is obtained by collecting statistics about service information of a plurality of types of virtual devices corresponding to the VNF, and the scaling is virtual device scale-out or virtual device scale-in; and
determine, based on the indication information, to perform scaling control on various types of virtual devices that match second scaling information, wherein the second scaling information comprises identifiers of VDUs corresponding to various types of scalable virtual devices that correspond to the KPI, and VDUs corresponding to a same sub-function exist in VDUs indicated by the second scaling information.

24. The apparatus according to any one of claims 18 to 20, wherein after the transceiver module sends the virtual device creation request to the resource management layer based on the first VDU, the processing module is further configured to:
obtain updated quantities of instances in at least two VDUs in a first group of VDUs, wherein VDUs in the first group of VDUs correspond to a same sub-function;
for a to-be-scaled-out VDU whose quantity of instances is increased in the at least two VDUs, control to add a first quantity of virtual devices corresponding to the to-be-scaled-out VDU, wherein the first quantity is an increased quantity of instances in the to-be-scaled-out VDU; and
for a to-be-scaled-in VDU whose quantity of instances is reduced in the at least two VDUs, control to reduce virtual devices corresponding to the to-be-scaled-in VDU by a second quantity, wherein the second quantity is a reduced quantity of instances in the to-be-scaled-in VDU.

25. The apparatus according to claim 24, wherein the processing module is specifically configured to obtain the updated quantities of instances in the at least two VDUs that are entered by a user.

26. The apparatus according to claim 24, wherein a virtualized network function descriptor VNFD describing the VNF comprises a plurality of pieces of indication information, and the indication information is used to indicate VDUs corresponding to a same sub-function;
before the processing module obtains the updated quantities of instances in the at least two VDUs in the first group of VDUs, the processing module is further configured to determine, based on the indication information, each VDU belonging to the first group of VDUs; and
correspondingly, the processing module is specifically configured to update a quantity of instances in the at least two VDUs in the first group of VDUs.

27. The apparatus according to any one of claims 18 to 26, wherein after the transceiver module sends the virtual device creation request to the resource management layer based on the first VDU, the processing module is further configured to:
obtain a migration instruction entered by the user;
obtain a name that is of a to-be-migrated virtual device and that is entered by the user;
determine, based on the name of the to-be-migrated virtual device and first indication information, a target VDU corresponding to a same sub-function as a VDU corresponding to the to-be-migrated virtual device, wherein the first indication information indicates another VDU corresponding to a same sub-function as the VDU corresponding to the to-be-migrated virtual device; and
control, according to the migration instruction and based on the target VDU, the to-be-migrated virtual device to be migrated to a server of a same type as a server corresponding to the target VDU.

28. A virtual network function deployment apparatus, wherein a network function virtualization infrastructure NFVI layer comprises a first-type server and a second-type server, and types of central processing units CPUs in the first-type server and the second-type server are different; and the apparatus comprises:
a processing module, configured to obtain a VDU describing a first sub-function of a virtual network function VNF, wherein the VDU describing the first sub-function comprises a common virtual name of an image file used to create a first-type virtual device and an image file used to create a second-type virtual device, a first server label indicating the first-type server, and a second server label indicating the second-type server, the first-type server can provide a computing resource for the first-type virtual device, and the first-type server can provide a computing resource for the second-type virtual device; and
a transceiver module, configured to send a virtual device creation request to a resource management layer based on the VDU describing the first sub-function, wherein the virtual device creation request is used to indicate the resource management layer to create the first-type virtual device and/or the second-type virtual device, to deploy the first sub-function.

29. A virtual network function deployment apparatus, wherein a network function virtualization infrastructure NFVI layer comprises a plurality of types of servers, and types of central processing units CPUs in different types of servers are different; and the apparatus comprises:
a transceiver module, configured to receive a virtual device creation request from a network function virtualization manager NFV MANO, wherein the virtual device creation request comprises a server label and a virtual name of an image file of a to-be-created virtual device; and
a processing module, configured to:
determine a target server from a server indicated by the server label;
map the virtual name and a type of the target server to a real name of the image file of the to-be-created virtual device according to a preset mapping rule;
obtain the image file of the to-be-created virtual device based on the real name; and
create the virtual device based on the virtual device creation request and the image file of the to-be-created virtual device.

30. A virtual network function deployment apparatus, wherein a first sub-function of a virtual network function VNF corresponds to a first-type virtual device and a second-type virtual device, a server that provides a computing resource for the first-type virtual device is a first-type server, a server that provides a computing resource for the second-type virtual device is a second-type server, and types of central processing units CPUs in the first-type server and the second-type server are different; and the apparatus comprises:
a processing module, configured to obtain configuration information, wherein the configuration information indicates that first-type software of the first sub-function corresponds to the first-type server, and second-type software of the first sub-function corresponds to the second-type server, wherein
the processing module is further configured to: install the first-type software of the first sub-function on the first-type virtual device, and install the second-type software of the first sub-function on the second-type virtual device, based on the configuration information.

31. The apparatus according to claim 30, further comprising a transceiver module, wherein
the transceiver module is configured to receive a scale-out pre-notification message from a network function virtualization manager NFV MANO, wherein the scale-out pre-notification message comprises a first type and a second type; and
the processing module is further configured to perform scale-out configuration based on the scale-out pre-notification message.

32. The apparatus according to claim 30 or 31, further comprising a transceiver module, wherein
the transceiver module is configured to:
receive a pre-scaling request from a network function virtualization manager NFV MANO, wherein the pre-scaling request comprises an identifier of a VDU corresponding to a to-be-scaled virtual device; and
if no notification message indicating that the NFV MANO is allowed to perform scaling on another type of virtual device corresponding to a same sub-function as the to-be-scaled virtual device is sent to the NFV MANO in a current scaling period, send a first-type notification message to the NFV MANO, wherein the first-type notification message indicates the NFV MANO to perform scaling control on one type of virtual device corresponding to the VDU indicated by the identifier that is of the VDU and that is comprised in the pre-scaling request, and the scaling is virtual device scale-out or virtual device scale-in; or
if a notification message indicating that the NFV MANO is allowed to perform scaling on another type of virtual device corresponding to a same sub-function as the to-be-scaled virtual device is sent to the NFV MANO in a current scaling period, send a second-type notification message to the NFV MANO, wherein the second-type notification message indicates the NFV MANO not to perform scaling control on one type of virtual device corresponding to the VDU indicated by the identifier that is of the VDU and that is comprised in the pre-scaling request.

33. A network function virtualization device, comprising:
at least one processor; and
a memory communicatively connected to the at least one processor, wherein
the memory stores instructions that can be executed by the at least one processor, and the instructions are executed by the at least one processor, so that the at least one processor can perform the method according to any one of claims 1 to 11, the method according to claim 12 or 13, the method according to claim 14, or the method according to any one of claims 15 to 17.

34. Anon-transitory computer-readable storage medium that stores computer instructions, wherein the computer instructions are used to enable a computer to perform the method according to any one of claims 1 to 11, the method according to claim 12 or 13, the method according to claim 14, or the method according to any one of claims 15 to 17.

35. A network function virtualization system, comprising a network function virtualization manager NFV MANO, a resource management layer, and a virtual network function VNF management node, wherein
the NFV MANO is configured to perform the method according to any one of claims 1 to 11 or the method according to claim 12 or 13;
the resource management layer is configured to perform the method according to claim 14; and
the VNF management node is configured to perform the method according to any one of claims 15 to 17.
